(19) **Europäisches Patentamt**

**European Patent Office**

**Office européen des brevets**

(11) **EP 0 953 756 B1**

(12) **EUROPEAN PATENT SPECIFICATION**

(45) Date of publication and mention
of the grant of the patent:
**10.12.2003 Bulletin 2003/50**

(51) Int Cl.⁷: **F02D 41/38**, F02D 41/40,
F02M 41/12

(21) Application number: **99108230.6**

(22) Date of filing: **27.04.1999**

(54) **Fuel injection control apparatus for an internal combustion engine**

Kraftstoffeinspritzungssteuerapparat für einen Verbrennungsmotor

Appareil de commande d'injection de carburant pour moteur à combustion interne

(84) Designated Contracting States:
**DE FR GB**

(30) Priority: **28.04.1998 JP 11962298**

(43) Date of publication of application:
**03.11.1999 Bulletin 1999/44**

(73) Proprietor: **TOYOTA JIDOSHA KABUSHIKI KAISHA**
**Aichi-ken 471-8571 (JP)**

(72) Inventor: **Kotani, Akira**
**Toyota-shi, Aichi-ken 471-8571 (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4-6**
**80336 München (DE)**

(56) References cited:
**GB-A- 2 316 194**

- **PATENT ABSTRACTS OF JAPAN vol. 011, no. 380 (M-650), 11 December 1987 (1987-12-11) & JP 62 150052 A (TOYOTA MOTOR CORP), 4 July 1987 (1987-07-04)**
- **PATENT ABSTRACTS OF JAPAN vol. 017, no. 263 (M-1415), 24 May 1993 (1993-05-24) & JP 05 001609 A (TOYOTA MOTOR CORP), 8 January 1993 (1993-01-08)**
- **PATENT ABSTRACTS OF JAPAN vol. 015, no. 039 (M-1075), 30 January 1991 (1991-01-30) & JP 02 277940 A (TOYOTA MOTOR CORP), 14 November 1990 (1990-11-14)**

## Description

The present invention relates to an apparatus for controlling the fuel injection of an internal combustion engine, and more particularly to a fuel injection control apparatus in accordance with the preamble of claim 1.

The combustion process in a diesel engine is roughly divided into a premixed combustion phase and a diffusion combustion phase. In the premixed combustion phase, fuel injected into a combustion chamber is mixed with air and self ignites. The mixture is combusted rapidly. In the subsequent diffusion phase, fuel is injected into the combusting gas in the combustion chamber during the premixed combustion phase, which continues the combustion.

As described above, the combustion is rapidly promoted in the premixed combustion phase. The rapid combustion results in a greater combustion speed and a higher combustion temperature. A prolonged premixed combustion phase or an increase in the amount of fuel that is rapidly combusted by self-ignition, increases the combustion noise and nitrogen oxide (NOx) in the exhaust gas.

In order to lower the combustion noise and to reduce the NOx in the exhaust gas, a fuel injection apparatus performing pilot injection has been proposed. This apparatus injects some of the fuel that is to be injected during one combustion process into a combustion chamber. Then, the apparatus temporarily stops injecting fuel. The first injection of fuel is referred to as the pilot injection. When the pilot injection is ignited, the apparatus then injects the remainder of the fuel into the combustion chamber. The second injection is referred to as the main injection. The pilot injection shortens the premixed combustion phase and reduces the amount of fuel that is rapidly combusted by self-ignition. As a result, the combustion pressure is increased at a slower rate and the combustion temperature is lowered. Therefore, the pilot injection apparatus lowers combustion noise and reduces the concentration of NOx in the exhaust gas.

Pilot injection is generally performed when the engine load is small and the engine speed is low. When the engine load is great or when the engine speed is high, performing pilot injection increases the concentration of NOx in the exhaust gas and lowers the engine power. Therefore, a typical fuel injection apparatus switches the injection mode between a pilot injection mode and a mode in which only one injection is executed.

However, even if the amount of fuel injected before and after injection modes changes is the same, switching the combustion mode greatly changes the combustion state in the combustion chamber. This results in an abrupt change of the engine torque.

Japanese Unexamined Patent Publication No. 5-1609 discloses an apparatus for controlling fuel injection of a diesel engine. When switching the combustion mode, the apparatus gradually changes the injection interval, or the interval between the pilot injection and the main injection. As result, the combustion state is slowly changed and the engine torque is not changed abruptly.

The advantages of pilot injection are obtained only when the subsequent main injection is started after the pilot injection self-ignites. Thus, if the injection interval is shortened and the main injection is started before the pilot fuel self-ignites or immediately after the pilot starts self-ignition, the pilot injection no longer functions as a combustion trigger. In other words, when pilot injection is performed with a short injection interval, the combustion state in the combustion chamber changes in the same manner as when pilot injection is not performed.

Therefore, the prior art apparatus can gradually change the engine torque as long as the injection interval is relatively long. When the injection interval becomes short and the pilot fuel does not create combustion trigger, it is impossible to control the change of the engine torque by changing the injection interval. Thus, the apparatus has fairly limited ability to graduate changes of the engine torque. That is, if the engine torque is changed by a large amount when changing the combustion mode, the apparatus cannot eliminate a sudden change of the engine torque, or a shock. GB-2 316 194 discloses a generic fuel injection control apparatus having a first injection mode for performing a single fuel injection for one cycle of a piston and a second injection mode for performing a set of fuel injections for one cycle of the piston, wherein the control apparatus selects from the first and the second modes, and a main fuel injection amount (QMAIN1) of at least one specific fuel injection of the set of fuel injections is greater than the fuel injection amount (QPLT1) of each remaining fuel injection of the set.

JP-A-62-150052 discloses a pilot injection control method, wherein a large torque fluctuation at the switching point between pilot injection and normal injection is prevented by augmenting the command value of the fuel injection quantity in advance at the time of performing pilot injection. Thus, reference 1 per se does not at all prompt a person skilled in the art to control the fuel injection amount in the manner according to the present invention.

JP-A-050011609 discloses a fuel injection control device, wherein, when a mode is switched from a pilot injection mode to a normal injection mode or vice versa, the device increases or decreases an injection interval $\Delta T$ exclusively gradually. This leads to the problem cited in the description of the present invention, that the pilot injection mode only functions with long injection intervals. Thus, reference 3 per se does not at all prompt a person skilled in the art to control the fuel injection amount in the manner according to the present invention.

It is the object of the present invention to provide a fuel injection control apparatus that prevents a sudden change of the engine torque when the combustion mode is switched.

The object is solved by a fuel injection control apparatus having the features of claim 1. The invention is further developed as it is defined in the dependent claims.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:

Fig. 1 is a schematic, cross-sectional view illustrating a fuel injection control apparatus according to a first embodiment of the present invention;

Fig. 2 is a graph defining a steady-state pilot injection amount based on the engine speed and the basic injection amount;

Figs. 3(a) and 3(b) are timing charts showing the ON/OFF state of an electromagnetic valve;

Fig. 4 is a graph defining a basic target fuel pressure based on the engine speed and the basic injection amount;

Figs. 5(a) to 5(j) are timing charts showing changes of control flags and control values;

Figs. 6(a) and 6(b) are graphs showing the relationship between the main injection timing and the engine torque during pilot injection mode and main injection mode;

Fig. 7 is a flowchart showing a routine for setting control flags;

Fig. 8 is a flowchart showing a continuation of the routine of Fig. 7;

Fig. 9 is a flowchart showing a routine for computing the injection amount;

Fig. 10 is a flowchart showing a routine for computing the injection interval angle;

Fig. 11 is a flowchart showing a routine for computing the injection angle;

Fig. 12 is a flowchart showing a continuation of the routine of Fig. 11;

Fig. 13 is a flowchart showing a routine for computing the target fuel pressure;

Fig. 14 is a flowchart showing a routing for computing the main injection amount according to another embodiment;

Figs. 15(a) and 15(b) are graphs showing the relationship between the final main injection amount and the engine torque during the pilot injection mode and the main injection mode according to the embodiment of Fig. 14; and

Figs. 16(a) and 16(b) are graphs showing the relationship between the main injection amount and the engine torque during pilot injection mode and main injection mode.

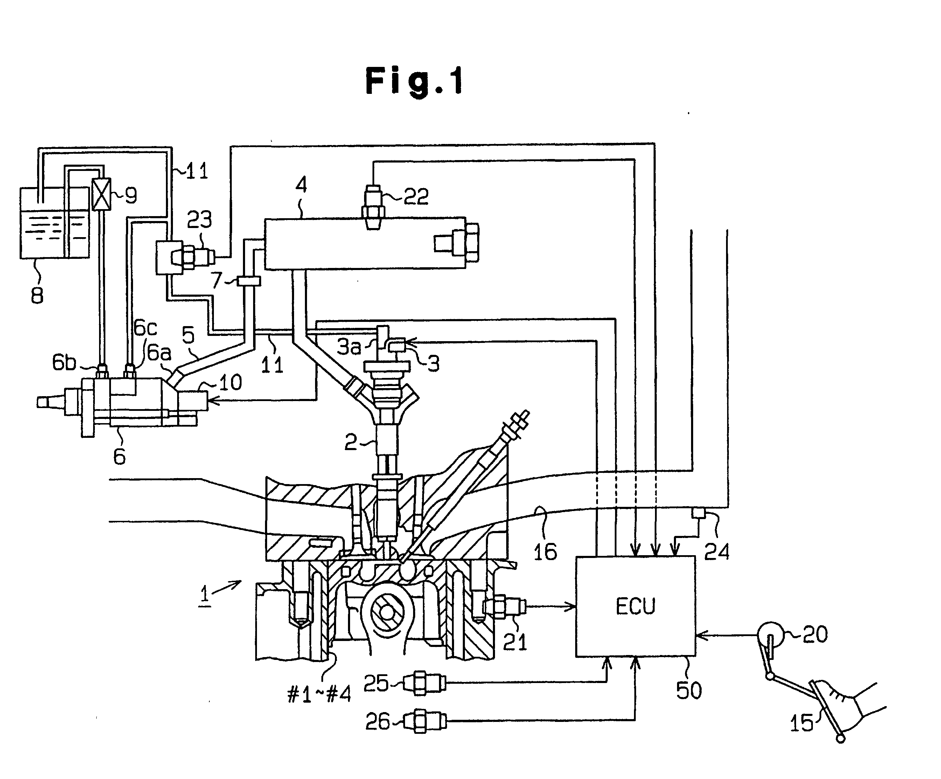

A first embodiment of an apparatus for controlling fuel injection in an internal combustion engine according to the present invention will now be described with reference to Figs. 1 to 13. The apparatus is installed in a diesel engine.

Fig. 1 shows an apparatus according to the first embodiment. A diesel engine 1 includes four cylinders #1-#4. The diesel engine 1 has injectors 2. Each injector 2 corresponds to the combustion chamber of one of the cylinders #1-#4 and injects fuel into the associated combustion chamber. The injectors 2 each have an electromagnetic valve 3, which controls the fuel injection. The injectors 2 inject fuel in one of two injection modes. Specifically, the injectors 2 are switched between pilot injection mode and main injection mode.

The injectors 2 are connected to a common rail 4. The common rail 4 is connected to an outlet port 6a of a supply pump 6 by a supply pipe 5. A check valve 7 is located in the supply pipe 5.

The supply pump 6 has a suction port 6b and a return port 6c. The suction port 6b is connected to a fuel tank 8 by a filter 9 and the return port 6c is connected to the fuel tank 8 by a return pipe 11. A return port 3a of each electromagnetic valve 3 is also connected to the fuel tank 8 by a return pipe 11.

The supply pump 6 has a plunger and a pressurizing chamber (both not shown). The plunger is reciprocated in synchronization with rotation of a crankshaft (not shown) of the engine 1. Fuel is supplied to the pressurizing chamber from the fuel tank 8. The pump 6 then pressurizes the fuel with the plunger. The pressurized fuel is sent to the common rail 4 through a discharge port 6a. A pressure control valve (PCV) 10 located in the vicinity of the discharge port 6a regulates the pressure of fuel discharged from the discharge port 6a.

The engine 1 also has various sensors to detect its running condition. A gas pedal sensor 20 is located in the vicinity of a gas pedal 15 to detect the depression degree ACCP of the pedal 15. A coolant temperature sensor 21 is located in the cylinder block of the diesel engine 1 to detect the temperature THW of coolant in the cylinder block. A fuel pressure sensor 22 is located in the common rail 4 to detect the pressure PC of fuel in the common rail 4. A fuel temperature sensor 23 is located in the return pipe 11 to detect the temperature THF of fuel. Further, an intake pressure sensor 24 is located in an intake passage 16 to detect the pressure PM of intake air in the passage 16.

A crank sensor 25 is located in the vicinity of the crankshaft of the engine 1. A cam sensor 26 is located in the vicinity of a camshaft (not shown), which rotates in synchronization with the crankshaft. The crank sensor 25 and the cam sensor 26 detect the number of rotations of the crankshaft per unit of time (the engine speed NE) and the rotational angle of the crankshaft (crank angle CA).

Signals from the sensors 20 to 26 are input to an electronic control unit (ECU) 50 of the engine 1. The ECU 50 includes a central processing unit (CPU), a memory, an input-output circuit and a driving circuit (none of which is separately shown). Based on the signals from the sensors 20 to 26, the ECU 50 reads and computes the running condition of the engine 1. The ECU 50 also controls the electromagnetic valves 3 and the PCV 10 thereby controlling the fuel injection of the engine 1. That is, the ECU 50 receives information as to the gas pedal depression degree ACCP, the coolant temperature THW, the fuel pressure PC, the fuel temperature THF and the intake pressure PM based on signals from the gas pedal sensor 20, the coolant temperature sensor 21, the fuel pressure sensor 22, the fuel temperature sensor 23 and the intake pressure sensor 24, respectively. Further, the ECU 50 computes the engine speed NE and the crank angle CA based on signals from the crank sensor 25 and the cam sensor 26.

Based on the input information, the ECU 50 determines the injection mode, the injection amount, the injection timing and injection pressure (fuel pressure in the common rail 4). The injection control will now be described.

Selection of the injection mode will first be described. The ECU 50 computes a basic injection amount QMAINB based on the gas pedal depression degree ACCP and the engine speed NE. The basic injection amount QMAINB accurately reflects the running condition of the engine 1 and is used for computing various values used in the injection control.

The memory of the ECU 50 stores function data defining the basic injection amount QMAINB based on the engine speed NE and the gas pedal depression degree ACCP. The ECU 50 refers to the function data for computing the basic injection amount QMAINB.

The ECU 50 computes a steady-state pilot injection amount QPLT2 based on the basic injection amount QMAINB and the engine speed NE. The steady-state injection amount QPLT2 is an optimal injection amount for a steady-state of the engine 1, that is, the condition of the engine 1 when sufficient time has elapsed since the combustion mode is switched from the main combustion mode to the pilot injection mode. The steady-state injection amount QPLT2 is determined in consideration of the combustion noise and the NOx concentration in the exhaust gas.

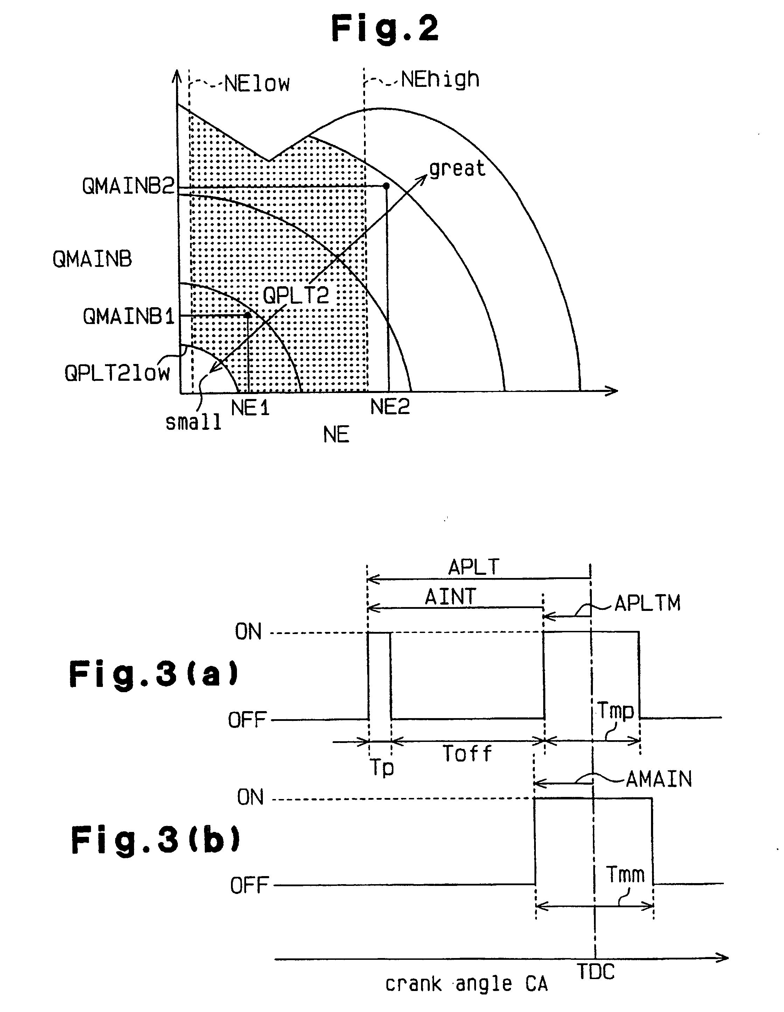

The memory of the ECU 50 stores the function data shown in Fig. 2. The function data defines the steady-state pilot injection amount QPLT2 based on the engine speed NE and the basic injection amount QMAINB. The ECU 50 refers to the function data of Fig. 2 for computing the steady-state pilot injection amount QPLT2.

Next, the ECU 50 selects the combustion mode based on the running condition of the engine 1. The ECU 50 selects the pilot injection mode if the following equations (1) and (2) are both satisfied. That is, the ECU 50 selects the pilot injection mode when the point corresponding to the steady-state injection amount QPLT2 and the engine speed NE is within the dotted region of the graph of Fig. 2. If any one of the following equations is not satisfied, the ECU 50 selects the main injection mode.

$$NElow \leqq NE \leqq NEhigh \qquad (1)$$

$$QPLT2 \geqq QPLT2low \qquad (2)$$

wherein the values NElow, NEhigh and QPLT2low are constants.

When the engine load is small and the engine speed NE is low, for example, when the engine speed NE and the basic injection amount QMAINB are NE1 and QMAINB1 shown in Fig. 2, the pilot injection mode is selected. Thus, when the engine load is small and the engine speed NE is low, the pilot injection is performed, which suppresses the combustion noise.

When the engine load is great and the engine speed NE is high, for example, when the engine speed NE and the basic injection amount QMAINB are NE2 and QMAINB2 in Fig. 2, the main injection mode is selected. Thus, when the engine load is great and the engine speed NE is high, the pilot injection is stopped. This lowers the NOx concentration of the exhaust gas and guarantees a predetermined engine power.

The timing of the fuel injection and the amount of injected fuel are controlled in the following manner based on the selected fuel injection mode.

Figs. 3(a) and 3(b) are timing charts showing the ON/OFF state of the electromagnetic valve 3. Fig. 3 (a) shows the pilot injection mode, and Fig. 3(b) shows the main injection mode.

When the pilot injection mode is selected, the ECU 50 performs a pilot injection and a main injection. The pilot injection precedes the main injection. When the crank angle CA reaches a pilot injection angle APLT, the ECU 50 outputs an ON signal (open signal) to the valve 3. This opens the injector 2 and starts the pilot injection.

The pilot injection angle APLT is defined as a relative crank angle that precedes the compression top dead center TDC of the associated cylinder #1 to #4. For example, if the pilot injection angle APLT is thirty degrees CA, an ON signal is sent to the valve 3 when the crank angle CA is at thirty degrees ahead of the compression top dead center TDC.

The pilot injection angle APLT is computed based on the following equation (3).

$$APLT=APLTM+AINT \qquad (3)$$

wherein APLTM is a main injection angle and AINT is a pilot injection interval angle.

In the equation (3), the main injection angle APLTM represents a time at which main injection is started during the pilot injection mode. Like the pilot injection angle APLT, the main injection angle APLTM precedes and is measured with respect to the compression top dead center. The memory of the ECU 50 stores function data defining the main injection angle APLTM based on the engine speed NE and the basic injection amount QMAINB. The ECU 50 refers the function data to determine the main injection angle APLTM.

In the equation (3), the injection interval angle AINT is an interval crank angle that is between the crank angle at which the pilot injection is started and the crank angle at which the main injection is started.

As described above, the ECU 50 sends an OFF signal (valve closing signal) to the electromagnetic valve 3 after the crankshaft rotates by a predetermined angle Tp from when the ON signal (valve opening signal) was sent to the valve 3. Consequently, the injector 2 is closed and the pilot injection is stopped. The predetermined angle Tp is determined based on the final pilot injection amount QPLT1 and the fuel pressure PC in the common rail 4. The final pilot injection amount QPLT1 is the amount of fuel injected into the combustion chamber during the pilot injection. When the pilot injection is completed, fuel injection from the injector 2 is temporarily suspended while the crankshaft rotates by a predetermined angle Toff.

After the crankshaft rotates by the predetermined angle Toff from when the pilot injection is stopped, that is, when the current crank angle CA is equal to the main injection angle APLTM, the ECU 50 outputs an ON signal to the electromagnetic valve 3. This opens the injector 2 and initiates the main injection.

When the crankshaft rotates by a predetermined angle Tmp from the start of the main injection, the ECU 50 again outputs an OFF signal to the valve 3, which closes the injector 2 and stops the main injection. The angle Tmp is predetermined based on the final main injection amount QMAIN and the fuel pressure PC in the common rail 4. The final main injection amount QMAIN is the amount of fuel injected into the combustion chamber during the main injection of the pilot injection mode. The ECU 50 computes the final main injection amount QMAIN using the following equation (4).

$$QMAIN=QMAINB-QPLT1 \qquad (4)$$

When the main injection mode is selected, the ECU 50 only performs the main injection.

As shown in Fig. 3(b), the ECU 50 outputs the ON signal to the electromagnetic valve 3 when the current crank angle CA reaches a main injection angle AMAIN. This opens the injector 2 and initiates the main injection.

The main injection angle AMAIN is determined in the same manner as the main injection time APLTM of the pilot injection mode. That is, the main injection angle AMAIN of the main injection mode precedes and is measured with respect to the compression top dead center.

The ECU 50 sends an OFF signal to the electromagnetic valve 3 when the crankshaft rotates by a predetermined angle Tmm frim when the main injection is started. This closes the injector 2 and stops the main injection. Like the predetermined angle Tmp in the pilot injection mode, the predetermined angle Tmm is determined based on the final main injection amount QMAIN and the fuel pressure PC in the common rail 4. If the injection amount and the injection pressure (fuel pressure) of the main injection mode are the same as those of the pilot injection mode, the predetermined angle Tmm is greater than the predetermine angle Tmp. This is because the final pilot injection amount QPLT1 is zero in the main injection mode and the final main injection amount QMAIN is equal to the basic injection amount QMAINB as shown in the equation (4).

Control of the injection pressure of fuel, or the fuel pressure in the common rail, will now be described.

The ECU 50 computes a basic target pressure PCRB based on the basic injection amount QMAINB and the engine speed NE. The basic target pressure PCRB is a target pressure of the fuel pressure in the common rail 4.

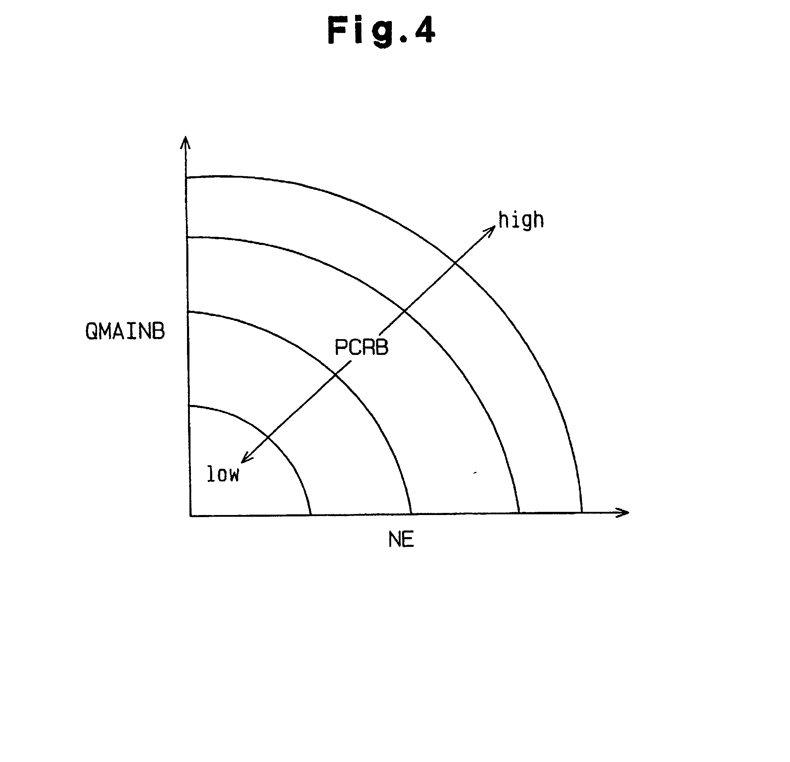

The basic target pressure PCRB is optimized for the running condition of the engine 1 in consideration of the combustion noise and the concentration of NOx in the exhaust gas. The memory of the ECU 50 stores the function data represented by the graph of Fig. 4, which defines the value of the basic target pressure PCRB based on the basic injection amount QMAINB and the engine speed NE. The ECU 50 refers to the function data represented by Fig. 4 for computing the basic target pressure PCRB. As shown in Fig. 4, the value of the basic target pressure PCRB increases as the value of the engine speed NE increases and as the value of the basic injection amount QMAINB increases.

This is because fuel atomization must be promoted by increasing the fuel pressure PC in the common rail 4 when the load acting on the engine 1 is great or when the engine speed NE is high.

The ECU 50 adjusts the basic target pressure PCRB to obtain a final target pressure PCR. The ECU 50 feedback controls the PCV 10 for controlling the amount of fuel discharged by the supply pump 6 such that the fuel pressure PC in the common rail 4 detected by the fuel pressure sensor 22 matches the final target pressure PCR.

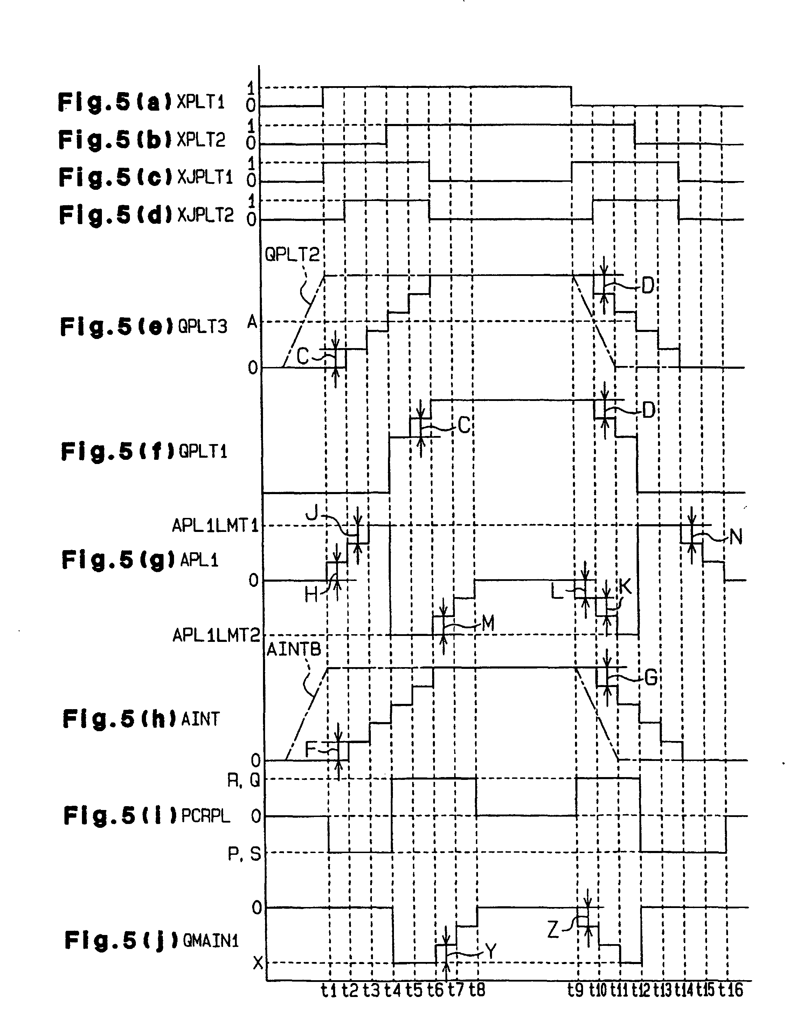

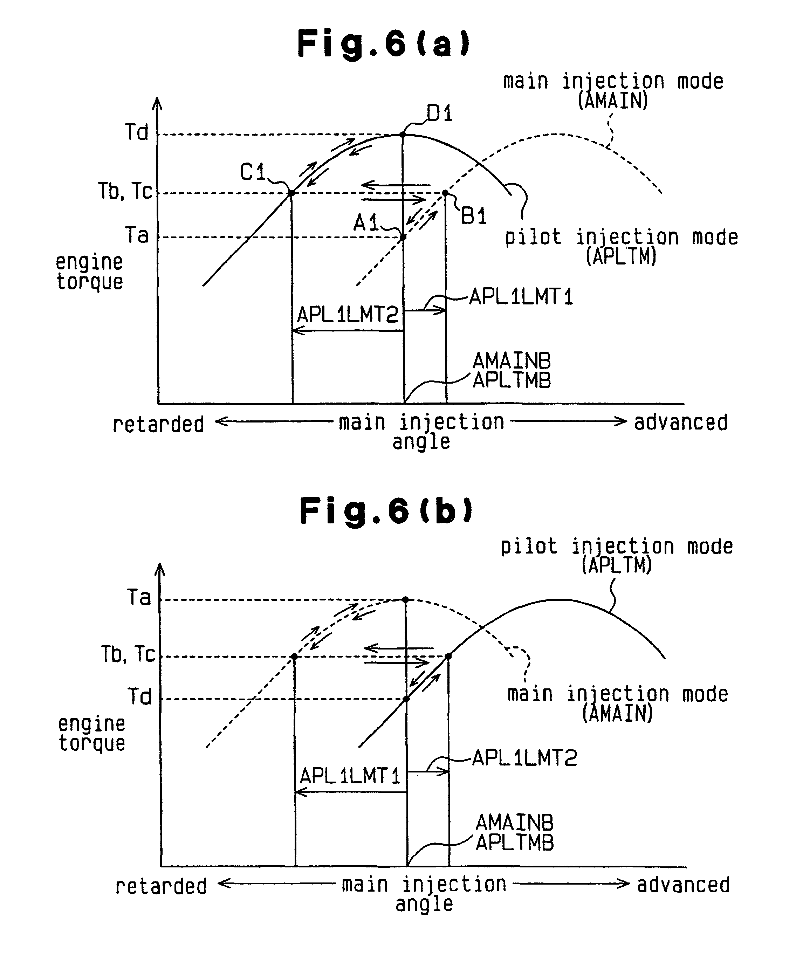

Control of the injection mode, the injection timing, the injection amount and the injection pressure will now be described with reference to Figs. 5 and 6.

Figs. 5(a) to 5(d) are timing charts showing changes of flags used by the fuel injection controlling apparatus according to the first embodiment.

Specifically, Fig. 5(a) shows changes of a pilot injection mode flag XPLT1. The pilot injection mode flag XPLT1 indicates whether the running condition of the engine 1 requires the pilot injection mode. The flag XPLT1 is set to one when the equations (1), (2) are both satisfied. If either of the equations (1), (2) is not satisfied the flag XPLT1 is set to zero.

Fig. 5(b) shows changes of a pilot injection execution flag XPLT2. The pilot injection execution flag XPLT2 indicates whether pilot injection is currently being used. The flag XPLT2 is set to one when a judgment pilot injection amount QPLT3 is greater than a threshold value A (A>0), and is set to zero when the judgement amount QPLT3 is smaller than the threshold value A. The threshold value A is the minimum injection amount that allows the stable pilot injection.

For example, even if the running condition of the engine 1 requires the pilot injection mode and the pilot injection mode flag XPLT1 is changed from zero to one, the pilot injection is not performed if the pilot injection execution flag XPLT2 is zero. Even if the pilot injection mode flag XPTL1 is changed from one to zero, pilot injection mode continues to be the active mode as long as the pilot injection execution flag XPLT2 is one.

The judgement pilot injection amount QPLT3 is a value that is temporarily set for judging whether the pilot injection needs to be performed. The judgement amount QPLT3 is also used for determining a final pilot injection amount QPLT1. Fig. 5(e) shows changes of the judgement pilot injection amount QPLT3.

Figs. 5(c) and 5(d) show changes of a main injection control permission flag XJPLT1 and a pilot injection control permission flag XJPLT2.

The main injection control permission flag XJPLT1 is set to one when the pilot injection mode flag XPLT1 is changed from zero to one or from one to zero. The permission flag XJPLT1 is set to zero when the judgement pilot injection amount QPLT3 is equal to the steady-state pilot injection amount QPLT2 or is zero. These flags shown in Fig. 5 are controlled in a flag setting routine, which will be discussed later.

If the main injection control permission flag XJPLT1 is set to one in the flag setting routine, the pilot injection control permission flag XJPLT2 is set to one in the following routine. Like the main injection control permission flag XJPLT1, the flag XJPLT2 is set to zero when the judgement pilot injection amount QPLT3 is equal to the steady-state pilot injection amount QPLT2 or is zero.

The fuel injection controlling apparatus according to the first embodiment controls the injection timing and the injection pressure of the main injection and the injection amount and the injection interval of the pilot injection for reducing the shock of torque fluctuations when switching the combustion mode. These controls are referred to as main injection control and pilot injection control. The main injection control permission flag XJPLT1 is used to determine when to start the main injection control. When the flag XJPLT1 is switched between one and zero, main injection control is initiated. The pilot injection control permission flag XJPLT2 is used to determine when to start pilot injection control. When the flag XJPLT2 is one, pilot injection control is initiated.

Fig. 5(f) shows changes of the final pilot injection amount QPLT1. The final pilot injection amount QPLT1 is always zero when the pilot injection execution flag XPLT2 is zero. The final pilot injection amount QPLT1 is equal the pilot injection amount QPLT3 when the flag XPLT2 is one.

Fig. 5(g) shows changes of an injection angle adjusting value APL1. The adjusting value APL1 is a crank angle by which the time of the main injection is advanced or retarded. Fig. 5(h) shows changes of the injection interval angle AINT. Fig. 5(i) shows changes of fuel pressure adjusting value PCRPL. The fuel pressure adjusting value PCRPL is the amount by which the basic target pressure PCRB (see Fig. 4) is lowered or raised. The raised or lowered value is defined as a final target pressure PCR.

Changes of the control values QPLT3, QPLT1, APL1, AINT and PCRPL in the main injection control and the pilot injection control will now be described.

If changes of the engine speed NE and the steady-state pilot injection amount QPLT2 cause the equations (1), (2) to be satisfied at the time t1, the pilot injection mode flag XPLT1 is set to one. The main injection control permission flag XJPLT1 is also set to one.

Therefore, the main injection control is executed from the time t1. That is, the injection angle adjusting value APL1 is gradually increased and the main injection angle AMAIN is gradually advanced, accordingly. However, since the final pilot injection amount QPLT1 is zero from the time t1 to the time t4, pilot injection is not performed.

The pilot injection permission flag XJPLT2 is set to one at the time t2 and the pilot injection control is started from the time t2. That is, the injection interval AINT is discretely increased by a predetermined amount, and the judgement pilot injection amount QPLT3 is discretely increased by a predetermined amount.

Fig. 6(a) shows the relationship between the main injection angle APLTM during the pilot injection mode and the relationship between the main injection angle AMAIN during the main injection mode. Hereinafter, the main injection angles APLTM and AMAIN will be referred to as the main injection angle when there is no need to distinguish between them.

As described above, when the main injection angle AMAIN is gradually advanced, the engine torque is gradually increased from a state represented by a point A1 to a state represented by a point B1 from the time t1 to the time t4. Compared to the injection interval AINT, the main injection angle is closely correlated with the engine torque and thus has greater influence on the torque. Therefore, changing the main injection angle positively controls the engine torque.

In the first embodiment, the rate of changing of the main injection angle AMAIN, or the rate of increase of the injection angle adjusting value APL1, is controlled. Therefore, even if the torque states represented by the points A1 and B1 are greatly different, the engine torque is gradually changed from the point A1 to the point B1 without a shock, or dramatic change. Thus, the engine torque during the main injection mode is smoothly changed to a torque that corresponds to the pilot injection, without a shock.

When the main injection angle AMAIN is changed, the time of fuel injection is advanced relative to a referential main injection angle AMAINB(see Fig. 6 (a)). Like the main injection angle AMAIN, the referential main injection angle AMAINB is defined as a crank angle that precedes the compression top dead center and is optimized for the running condition of the engine 1 in consideration of the combustion noise and the NOx concentration of the exhaust gas.

Advancing the injection timing relative to the referential main injection angle AMAINB increases the ratio of fuel combusted in the premix combustion to fuel combusted in the main combustion that follows. This can suddenly increase the combustion pressure, thus increasing the combustion noise.

However, the fuel pressure adjusting value PCRPL is changed to a negative value P during a period from the time t1 to the time t4, in which the main injection angle AMAIN is advanced. This changes the final target fuel pressure PCR to a value (PCRB+P<PCRB) that is lower than the basic target pressure PCRB, thereby lowering the fuel pressure PC in the common rail 4.

Consequently, the pressure of fuel injected from the injector 2 is lowered, which suppresses the atomization of the injected fuel. This, in turn, prevents a sudden increase of the combustion pressure. Thus, advancing the main injection angle AMAIN does not increase the combustion noise.

When the judgement pilot injection amount QPLT3 surpasses the predetermined value A, the pilot injection execution flag XPLT2 is set to one. Further, the final pilot injection amount QPLT1 is set equal to the judgement pilot injection amount QPLT3. This initiates pilot injection.

After the time t2, the injection angle adjusting value APL1 is increased discretely until the value APL1 is equal to a first limit value APL1LMT1, which is greater than zero. At this time, the adjusting value APL1 is changed to a second limit value APL1LMT2, which is smaller than zero. The first and second limit values APL1LMT1 and APL1LMT2 will be described later.

The change of the injection angle adjusting value APL1 retards the main injection angle APLTM of the pilot injection mode relative to the referential main injection angle APLTMB (see Fig. 6(a)). Like the main injection angle APLTM, the reference main injection angle APLTMB is defined as a crank angle that precedes the compression top dead center and is optimized for the running condition of the engine 1 in consideration of the engine torque, the combustion noise and the concentration of the exhaust gas. Fig. 6(a) shows a case in which the referential main injection angle AMAINB matches the referential main injection angle APLTMB.

After the time t4, the final pilot injection amount QPLT1 is gradually increased as the judgement pilot injection amount QPLT3 is increased. At the time t6, the judgement pilot injection amount QPLT3 reaches the steady-state pilot injection amount QPLT2. After the time 6, the judgement pilot injection amount QPLT3 is equal to the steady-state pilot injection amount QPLT2. Thus, the final pilot injection amount QPLT1 is equal to the steady-state pilot injection amount QPLT2.

The injection interval angle AINT, which is increased discretely from the time t2, keeps increasing after the time t4. At the time t6, the injection interval angle AINT is equal to the steady-state injection interval angle AINTB. After the time t6, the injection interval angle AINT is equal to the steady-state injection interval angle AINTB. Like the steady-state pilot injection amount QPLT2, the steady-state injection interval angle AINTB is optimized for steady-state running of the engine 1, that is, for the condition of the engine 1 when sufficient time has elapsed since the combustion mode is switched from the main combustion mode to the pilot injection mode. The steady-state injection interval angle AINTB is determined in NOx consideration of the combustion noise and the concentration the exhaust gas.

As described above, the changes of the main injection angle APLTM, the final pilot injection amount QPLT1 and the injection interval angle AINT during the period from the time t4 to the time t6 change the engine torque from the point B1 to a point C1 in Fig. 6(a).

In Fig. 6(a), engine torque values Tb and Tc correspond to the points B1, C1, respectively. The value Tb represents a torque value when the main injection angle AMAIN of the main injection mode is changed by an angle corresponding to the first limit value APL1LMT1. The value Tb is hereafter referred to as a first transient torque value. The value Tc represents a torque value when the main injection angle APLTM of the pilot injection mode is changed by an angle corresponding to the second limit value APL1LMT2. The value Tc is hereafter referred to as a second transient torque value Tc. The limit values APL1LMT1 and APL1LMT2 are determined such that the first and second transient torque values Tb, Tc satisfy at least one of the following equations (5a) and (5b).

$$Ta \leqq Tb = Tc \leqq Td \qquad (5a)$$

$$Td \leqq Tb = Tc \leqq Ta \qquad (5b)$$

wherein Ta is a steady-state torque value of the main injection mode and Td is a steady-state torque value of the pilot injection mode.

In the equations (5a), (5b), the steady-state torque value Ta is a torque value when the main injection angle AMAIN of the main injection mode is equal to the referential main injection angle AMAINB. The steady-state torque value Td is a torque value when the main injection angle APLTM of the pilot injection mode is equal to the referential main injection angle APLTMB.

The limit values APL1LMT1 and APL1LMT2 are determined in the above described manner. Thus, when the combustion mode is switched from the main injection mode to the pilot injection mode in the period from the time t4 to the time t6, the switching of the combustion mode does not change the engine torque.

Therefore, the apparatus of the first embodiment positively eliminates torque shock when the combustion mode is.switched from the main injection mode to the pilot injection mode.

The injection interval angle AINT is not immediately changed to the steady-state injection interval angle AINTB at the time t4, when the fuel injection mode is switched from the main injection mode to the pilot injection mode. Instead, the injection interval angle AINT is gradually increased from an interval that is smaller than the steady-state injection interval angle AINTB to the steady-state injection interval angle AINTB.

Therefore, the apparatus of the first embodiment allows the combustion state to change gradually when the combustion mode is switched, thereby positively eliminating the shock due to torque changes.

As described above, the injection interval angle AINT is temporarily made shorter than the steady-state injection interval angle AINTB during the period from the time t4 to the time t6. While this suppresses shocks due to torque fluctuations, it may cause the main injection to start before the fuel pressure, which is raised by the pilot injection, has been lowered. The possible sudden increase of the fuel pressure could increase the combustion noise.

However, in the apparatus of the first embodiment, the final pilot injection amount QPLT1 is gradually increased to the steady-state pilot injection amount QPLT2. Therefore, the final pilot injection amount QPLT1 is smaller than the steady-state pilot injection amount QPLT2 during the period from the time t4 to the time t6, when the injection interval angle AINT is relatively small. Thus, the fuel pressure that is temporarily raised by the pilot injection is lowered as early as possible.

Therefore, the main injection is implemented when the fuel pressure, which was raised by the pilot injection, is sufficiently lowered. This prevents the fuel pressure from being suddenly increased thereby reducing the combustion noise.

After the combustion mode is switched from the main injection mode to the pilot injection mode, the main injection control permission flag XJPLT1 and the pilot injection control permission flag XJPLT2 are both set to zero at the time t6. After the time t6, the main injection control is started again. That is, the injection angle adjusting value APL1 is discretely increased from the second limit value APL1LMT2 until it reaches zero at the time t8. Accordingly, the main injection angle APLTM is gradually advanced.

As described above, changing the main injection angle APLTM gradually increases the engine torque from a state represented by a point C1 to a state represented by a point D1 in a period from the time t6 to the time t8.

As described above, the rate of change of the main injection angle APLTM, or the rate of increase of the injection angle adjusting value APL1, is adjusted. Therefore, even if the torque states represented by the points C1 and D1 are greatly different, the engine torque is gradually changed such that there is no torque shock. Thus, the engine torque is gradually changed to the steady-state torque during the pilot injection mode.

The injection angle adjusting value APL1 has a negative value in the period from the time t4 to the time t8. During this period the main injection angle APLTM is retarded relative to the referential main injection angle APLTMB (see Fig. 6(a)). This lowers the combustion speed thereby causing fuel to be incompletely combusted. Accordingly, the NOx concentration of the exhaust gas is increased.

However, in the first embodiment, the fuel pressure adjusting value PCRPL is changed from the predetermined value P (P<0) to a predetermined positive value R. During the period from the time t4 to time t8, in which the main injection angle APLTM is retarded relative to the referential main injection angle APLTMB, the fuel pressure adjusting value PCRPL is maintained at the value R. This changes the final target fuel pressure PCR a pressure represented by an equation PCRB+R>PCRB, which is higher than the basic target pressure PCRB. Accordingly, the fuel pressure PC in the common rail 4 is increased.

Therefore, the pressure of the injected fuel is increased and the atomization of the injected fuel is promoted, which prevents incomplete combustion and lowers the concentration of NOx in the exhaust.

When the injection angle adjusting value APL1 becomes zero at the time t8, the fuel pressure adjusting value PCRPL is changed from the value R to zero. From the time t8 to the time t9, the injection angle adjusting value APL1 and the fuel pressure adjusting value PCRPL are maintained at zero. As a result, the steady-state pilot injection is executed.

Then, in the illustrated example, changes of the engine speed NE and the steady-state pilot injection amount QPLT2 cause one of the equations (1), (2) to be unsatisfied at the time t9. Then the pilot injection mode flag XPLT1 is set to zero and the main injection control permission flag XJPLT1 is set to one.

Since the main injection control permission flag XJPLT1 is set zero, the main injection control is executed from the time t9. That is, the injection angle adjusting value APL1 is gradually decreased, and the main injection angle APLTM is gradually retarded accordingly. In the period from the time t9 to the time t12, the final pilot injection amount QPLT1 is greater than zero and the pilot injection is continued.

The pilot injection control permission flag XJPLT2 is set to one at the time 10. Accordingly, the pilot injection control is executed from the time t10. That is, the injection interval angle AINT is discretely decreased and the judgement pilot injection amount QPLT3 is also discretely decreased. Thus, the final pilot injection amount QPLT1 is gradually decreased and the injection interval angle AINT is gradually shortened from the steady-state injection interval angle AINTB.

As described above, the main injection angle APLTM, the final pilot injection amount QPLT1 and the injection interval angle AINT are changed in the period from the time t9 to the time t12. Accordingly, as shown in Fig. 6(a), the engine torque is gradually decreased from the state represented by the point D1 to the state represented by the point C1. Like in the period from the time t6 to the time t8, the rate of change of the main injection angle APLTM, or the rate of increase of the injection angle adjusting value APL1, is adjusted in the period from the time t9 to the time t12 such that the engine torque is not changed abruptly. This prevents abrupt torque fluctuations. Thus, the engine torque is changed from the steady-state engine torque of the pilot injection mode to a torque corresponding to the time at which the pilot injection is stopped.

In the period between the time t9 and the time t12, the fuel pressure adjusting value PCRPL is changed from zero to a positive value Q (Q>0). Therefore, the final target fuel pressure PCR is set higher than the referential fuel pressure PCRB (PCR=PCRB+Q>PCRB) and the fuel pressure PC in the common rail 4 is increased. As a result, as in the period between the time t4 and the time t8, an increase in the NOx concentration, which would be caused by retarding the main injection angle APLTM relative to the referential angle APLTMB, is prevented.

In the period between the time t10 to the time t12, the final pilot injection amount QPLT1 is gradually decreased and the injection interval AINT is gradually shortened from the steady-state injection interval AINTB. Thus, as in the period between the time t4 to the time t6, the apparatus allows the combustion state to change gradually when the combustion mode is changed, which positively eliminates abrupt torque fluctuations. Further, the main injection is started when the fuel pressure, which is raised by the pilot injection, is sufficiently lowered. Therefore, a sudden increase of the combustion pressure is avoided, which decreases combustion noise.

Then, the judgement pilot injection amount QPLT3 is decreased and becomes smaller than the threshold value A at the time 12. At this time, the pilot injection execution flag XPLT2 is set to zero and the final pilot injection amount QPLT1 is changed to zero. This stops the pilot injection.

At the time t12, the injection angle adjusting value APL1 is changed from the second limit value APL1LMT2 to the first limit value APL1LMT1. Accordingly, the main injection angle AMAIN of the main injection mode is advanced relative to the referential main injection angle AMAINB (see Fig. 6(a)).

The final pilot injection amount QPLT1 and the main injection angle AMAIN are changed in the above described manner. Accordingly, the engine torque is changed from the point C1 to the point B1 as shown in Fig. 6(a).

The first transient torque value Tb is equal to the second transient torque value Tc. Thus, even if the injection mode is switched from the pilot injection mode to the main injection mode at the time t12, the switching of the injection mode does not generate a torque shock.

When the judgement pilot injection amount QPLT3 becomes equal to zero at the time t14, the main injection control permission flag XJPLT1 and the pilot injection control permission flag XJPLT2 are both set to zero. In the period between the time t14 and the time t16, the injection angle adjusting value APL1 is discretely decreased from the first limit value APL1LMT1 to zero. This, in turn, gradually retards the main injection angle AMAIN.

Then, the engine torque is gradually decreased from the point B1 to the point A1. As in the period between the time t1 and the time t4, the rate of change of the main injection angle AMAIN, or the rate of increase of the injection angle adjusting value APL1, is gradually changed in the period from the time t14 to the time t16 such that the engine torque is gradually changed. Therefore, the engine torque is changed to a steady-state torque of the main injection mode without a torque shock

After the time t16, the injection angle adjusting value APL1 is maintained at zero. This sets the main injection angle AMAIN equal to the referential main injection angle AMAINB. As a result, the steady-state main injection is started.

In the period between the time t12 and the time t16, the main injection angle AMAIN is advanced relative to the referential main injection angle AMAINB, and the fuel pressure adjusting value PCRPL is changed from the value Q to a negative value S (S<0). Therefore, as in the period from the time t1 to the time t4, the fuel pressure PC in the common rail 4 is lowered and atomization of injected fuel is suppressed. This reduces the combustion noise.

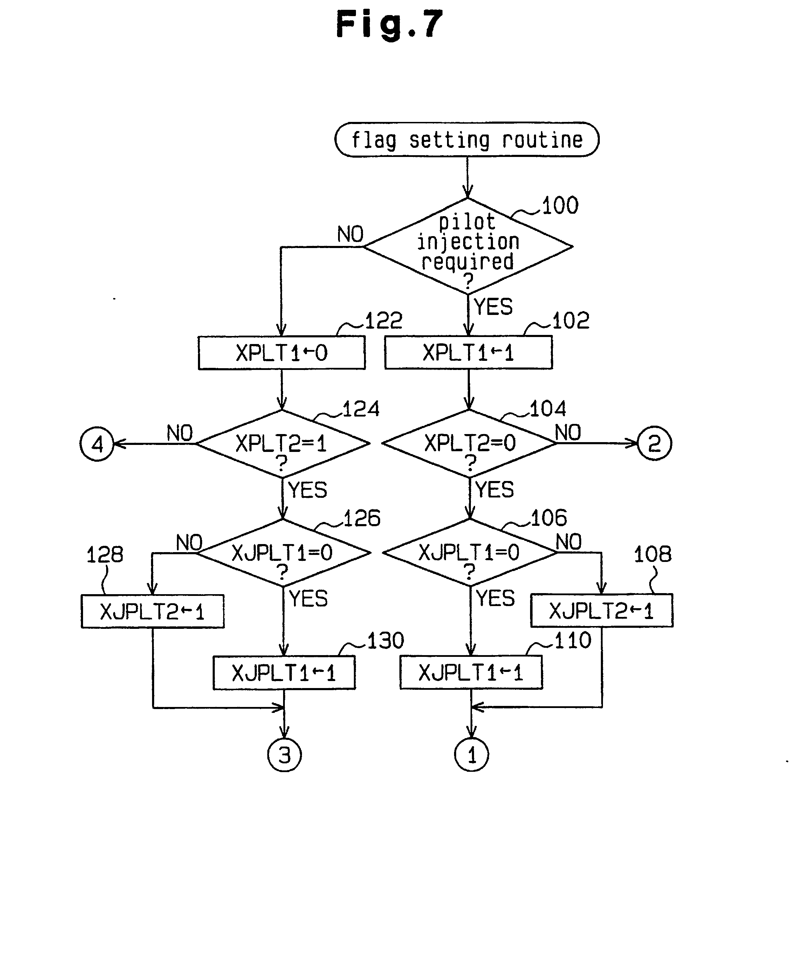

The program designed for executing the fuel injection control according to this embodiment will now be described with reference to flowcharts of Figs. 7 to 13 and the timing chart of Fig. 5.

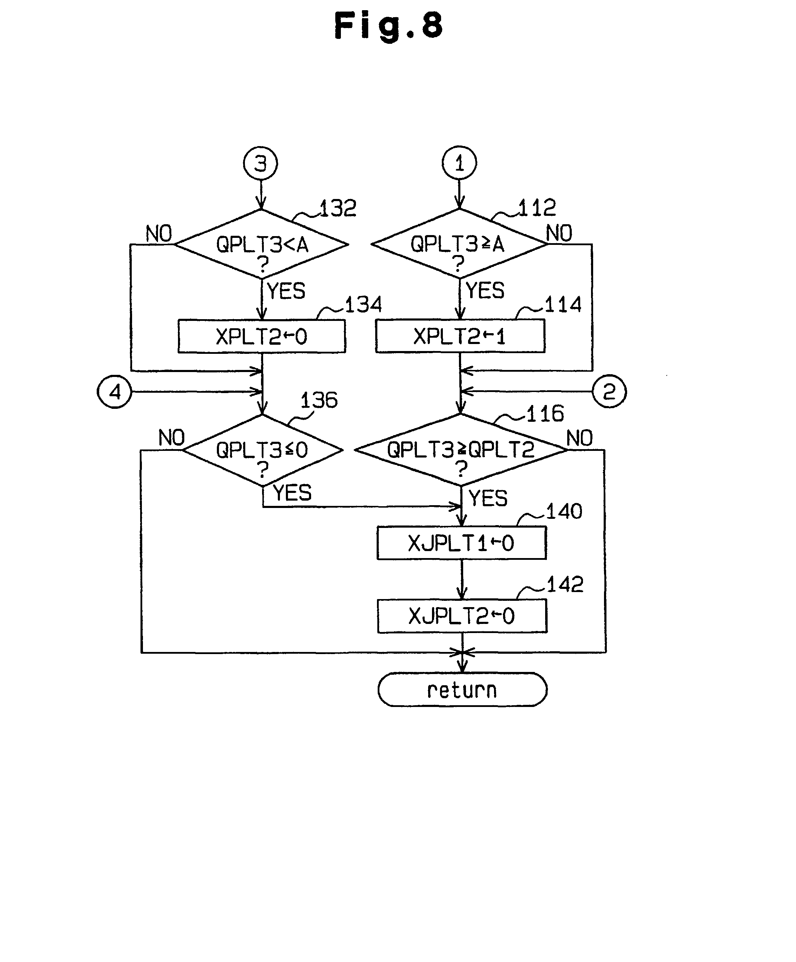

Figs. 7 and 8 are flowcharts showing a routine for setting the control flags XPLT1, XPLT2, XJPLT1, XJPLT2, which are used in routines described below. The ECU 50 executes the routine of Figs. 7 and 8 in an interrupting manner at predetermined crank angle increments (for example, at every 180 degrees).

When entering this routine, the ECU 50 judges whether the current state of the engine 1 requires the pilot injection mode at step 100. This judgement is determined based on whether the engine speed NE and the steady-state pilot injection amount QPLT2 satisfy both equations (1) and (2) .

If the determination is positive at step 100 (from the time t1 to the time t8), the ECU 50 executes steps 102 to 116. Steps 102 to 106 are executed when the injection mode is switched from the main injection mode to the pilot injection mode.

At step 102, the ECU 50 sets the pilot injection mode flag XPLT1 to one.

At step 104, the ECU 50 judges whether the pilot injection execution flag XPLT2 is set to zero. If the determination is negative (the time t5 to the time t8), the ECU 50 moves to step 116 shown in Fig. 8. If the determination is positive at step 104 (the time t1 to the time t4), the ECU 50 moves to step 106.

At step 106, the ECU 50 judges whether the main injection control permission flag XJPLT1 is zero. If the determination is positive (the time t1), the ECU 50 moves to step 110 and changes the flag XJPLT1 to one. If the determination is negative at step 106 (from the time t2 to the time t4), the ECU 50 moves to step 108 and sets the pilot injection control permission flag XJPLT2 to one.

After executing steps 108 or 110, the ECU 50 moves to step 112 shown in Fig. 8. At step 112, the ECU 50 compares the judgement pilot injection amount QPLT3 with the threshold value A. If the judgement value QPLT3 is smaller than the threshold value A (the time t1 to the time t3), the ECU 50 moves to step 116. If the judgement value QPLT3 is equal to or greater than the threshold value A (the time t4), the ECU 50 moves to step 114 and sets the pilot injection execution flag XPLT2 to one. Thereafter, the ECU 50 moves to step 116.

At step 116, the ECU 50 compares the judgement pilot injection amount QPLT3 with the steady-state pilot injection amount QPLT2. If the judgement amount QPLT3 is equal to or greater than the steady-state pilot injection amount QPLT2 (the time t6 to the time t8), the ECU 50 moves to step 140 and sets the main injection control permission flag XJPLT1 to zero. Thereafter, the ECU 50 moves to step 142 and sets the pilot injection control permission flag XJPLT2 to zero.

After executing step 142 or if the judgement pilot injection amount QPLT3 is smaller than the steady-state pilot injection amount QPLT2 at step 116 (the time t1 to the time t5), the ECU 50 temporarily suspends the subsequent processing.

If the current running state of the engine 1 does not require the pilot injection mode (the time t9 to the time t16) at step 100, the ECU 50 executes steps 122 to 136. Steps 122 to 136 are executed when the injection mode is switched from the pilot injection mode to the main injection mode.

At step 122, the ECU 50 sets the pilot injection mode flag XPLT1 to zero. Then, at step 124, the ECU 50 judges whether the pilot injection execution flag XPLT2 is one. If the determination is positive (the time t9 to the time t12), the ECU 50 moves to step 126. If the determination is negative at step 124 (the times t13 to the time t16), the ECU 50 moves to step 136 shown in Fig. 8.

At step 126, the ECU 50 judges whether the main injection control permission flag XJPLT1 is zero. If the determination is positive (the time t9), the ECU 50 moves to step 130 and changes the main injection control flag XJPLT1 to one. If the determination is negative at step 126 (the time t10 to the time t12), the ECU 50 moves to step 128 and sets the pilot injection control permission flag XJPLT2 to one.

After executing steps 128 or 130, the ECU 50 moves to step 132 shown in Fig. 8. At step 132, the ECU 50 compares the judgement pilot injection amount QPLT3 with the threshold value A. If the judgement amount QPLT3 is equal to or greater than the threshold value A (from the time t9 to the time t11), the ECU 50 moves to step 136. If the judgement amount QPLT3 is smaller than the threshold value A at step 132 (from the time t12 to the time t16), the ECU 50 moves to step 134 and sets the pilot injection execution flag XPLT2 to zero. Thereafter, the ECU 136 moves step 136.

At step 136, the ECU 50 compares the judgement pilot injection amount QPLT3 with zero. If the judgement amount QPLT3 is greater than zero (the time t9 to the time 13), the ECU 50 temporarily suspends the subsequent processing. If the judgement amount QPLT3 is equal to or smaller than zero at step 136 (the time t14 to the time t16), the ECU 50 executes steps 140 and 142. Thereafter, the ECU 50 temporarily suspends the subsequent processing.

In this manner, the flags XPLT1, XPLT2, XJPLT1, XJPLT2 are set in accordance with the running state of the engine 1.

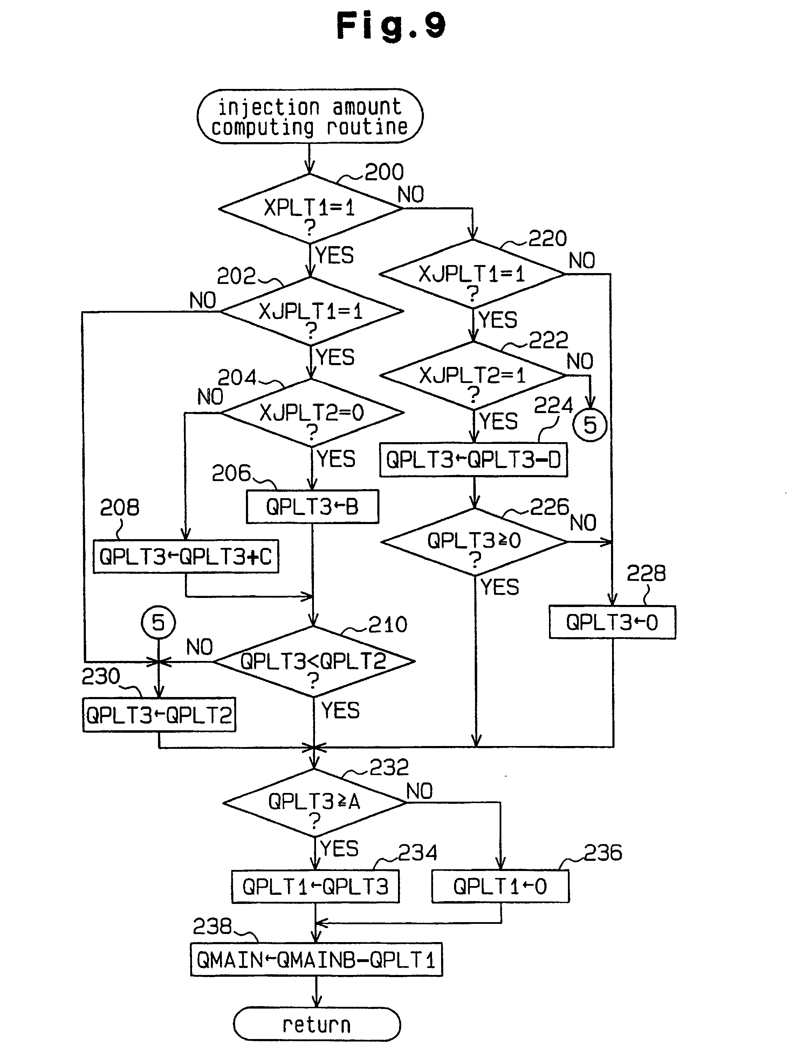

A routine for computing the injection amount will now be described with reference to a flowchart of Fig. 9. The routine is designed for computing the pilot injection amount and the main injection amount. Like the flag setting routine, the ECU 50 executes the routine of Fig. 9 in an interrupting manner at predetermined crank angle increments (for example, at every 180 degrees).

When entering this routine, the ECU judges whether the pilot injection mode flag XPLT1 is one at step 200. If the determination is positive, the ECU 50 moves to step 202. At step 202, the ECU 50 judges whether the main injection control permission flag XJPLT1 is one. If the determination of step 202 is positive, the ECU 50 moves to step 204 and judges whether the pilot injection control permission flag XJPLT2 is zero.

If the determination at step 204 is positive, the ECU 50 moves to step 206 and sets the judgement pilot injection amount QPLT3 equal to a predetermined value B (the time t1). The value B is the initial value of the judgement amount QPLT3. In the timing chart of Fig. 5, the value B is set to zero.

If the determination is negative at step 204, the ECU 50 moves to step 208. At step 208, the ECU 50 adds a predetermined value C (C>0) to the judgement pilot injection amount QPLT3 and sets the resultant (QPLT3+C) as the new judgement amount QPLT3. Repetitive execution of step 208 gradually increases the judgement amount QPLT3 (see Fig. 5(e)) in the period between the time t2 and the time t6.

After executing steps 206 or 208, the ECU 50 moves to step 210. At step 210, the ECU 50 compares the judgement pilot injection amount QPLT3 with the steady-state pilot injection amount QPLT2. If the judgement amount QPLT3 is equal to or greater than the steady-state pilot injection amount QPLT2, the ECU 50 moves to step 230 and sets the judgement amount QPLT3 equal to the steady-state pilot injection amount QPLT2. If the determination is negative at step 202, the ECU 50 also executes step 230.

Execution of steps 202, 210 and 230 maintains the judgement pilot injection amount QPLT3 equal to the steady-state pilot injection amount QPLT2 (the dashed line in Fig. 5(e)) in the period between the time t6 and the time t9.

If the determination is negative at step 200, the ECU 50 moves to step 220 and judges whether the main injection control permission flag XJPLT1 is one. If the determination is positive, the ECU 50 moves to step 222 and judges whether the pilot injection control permission flag XJPLT2 is one. If the determination is negative at step 222 (the time t9), the ECU 50 executes step 230.

If the determination is positive at step 222, the ECU 50 moves to step 224 and subtracts a predetermined value D (D>0) from the current judgement pilot injection amount QPLT3 and sets the resultant (QPLT3-D) as the new judgement pilot injection amount QPLT3. Repetitive execution of step 224 gradually decreases the judgement pilot injection amount QPLT3 (see Fig. 5(e)) in the period between the time t10 to the time t13.

At step 226, the ECU 50 compares the judgement pilot injection amount QPLT3 with zero. If the judgement amount QPLT3 is smaller than zero, the ECU 50 moves to step 228 and sets the judgement amount QPLT3 to zero. If the determination is negative at step 220 (from the time t14 to the time t16), the ECU 50 also executes step 228.

Execution of steps 220, 226 and 228 maintains the judgement pilot injection amount QPLT3 (see Fig. 5 (e)) at zero in the period between the time t14 and the time t16.

After executing steps 228 or 230, the ECU 50 moves to step 232. If the judgement pilot injection amount QPLT3 is smaller than the steady-state pilot injection amount QPLT2 at step 210, the ECU 50 also moves to step 232. Likewise, if the judgement pilot injection amount QPLT3 is equal to or greater than zero at step 226, the ECU 50 moves to step 232.

At step 232, the ECU 50 compares the judgement pilot injection amount QPLT3 with the predetermined value A. If the judgement amount QPLT3 is equal to the value A, the ECU 50 moves to step 234 and equalizes the final pilot injection amount QPLT1 with the judgement pilot injection amount QPLT3 (QPLT3$\geqq$A>0). Accordingly, the pilot injection is performed in the period between the time t4 and the time t12 in Fig. 5.

If the judgement pilot injection amount QPLT3 is smaller than the value A at step 232, the ECU 50 moves to step 236 and sets the final pilot injection amount QPLT1 to zero. Accordingly, the pilot injection is stopped in the period between the time t1 and the time t4 and in the period between the time t12 and the time t16.

After executing steps 234 or 236, the ECU 50 computes the final main injection amount QMAIN based on the equation (4) at step 238. Therefore, if the final pilot injection amount QPLT1 is computed in step 234, the final main injection amount QMAIN is equal to the basic injection amount QMAINB from which the final pilot injection amount QPLT1 is subtracted. On the other hand, if the final pilot injection amount QPLT1 is computed at step 236, the final main injection amount QMAIN is equal to the basic injection amount QMAINB. After executing step 238, the ECU 50 temporarily suspends the subsequent processing.

As described above, the ECU 50 computes the judgement pilot injection amount QPLT3, the final main injection amount QMAIN and the final pilot injection amount QPLT1 based on the routine of Fig. 9.

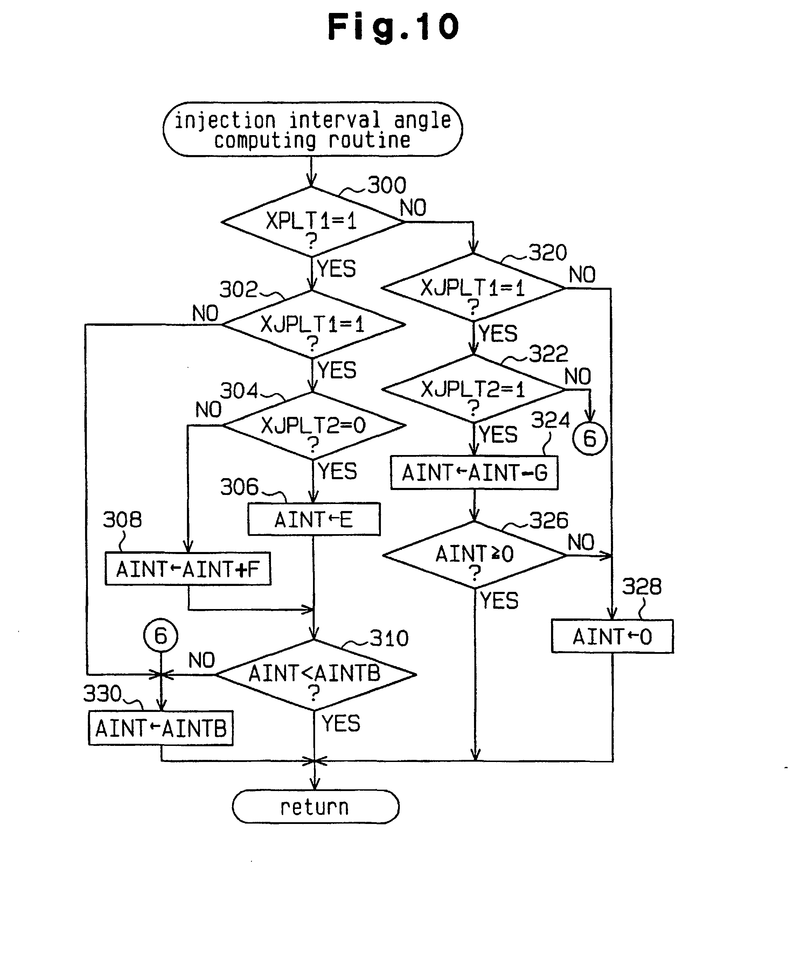

A routine for computing the injection interval angle AINT will now be described with reference to a flowchart of Fig. 10. The ECU 50 executes this routine in an interrupting manner at the same crank angle increments (for example, at every 180 degrees of CA) as the flag setting routine.

When entering the routine of Fig. 10, the ECU 50 judges whether the pilot injection mode flag XPLT1 is set to one at step 300. If the determination is positive, the ECU 50 moves to step 302. At step 302, the ECU 50 judges whether the main injection control permission flag XJPLT1 is one. If the determination is positive at step 302, the ECU 50 moves to step 304 and judges whether the pilot injection control permission flag XJPLT2 is zero.

If the determination is positive at step 304, the ECU 50 moves to step 306 and sets the injection interval angle AINT to a predetermined value E (the time t1). The value E is an initial value of the injection interval angle AINT. In the timing chart of Fig. 5, the value E is zero.

If the determination is negative at step 304, the ECU 50 moves to step 308 and adds a predetermined value F (F>0) to the current injection interval angle AINT. The ECU 50 sets the resultant (AINT+F) as a new injection interval angle AINT.

Repetitive execution of step 308 gradually increases the injection interval angle AINT (see Fig. 5(h)) in the period between the time t2 to the time t6.

After executing steps 306 or 308, the ECU 50 moves step 310 and compares the injection interval angle AINT with the steady-state injection interval angle AINTB. If the injection interval angle AINT is equal to or greater than the steady-state injection interval angle AINTB, the ECU 50 moves to step 330. At step 330, the ECU 50 sets the injection interval angle AINT to the steady-state injection interval angle AINTB. The ECU also executes step 330 if the determination is negative at step 302.

Execution of steps 302, 310 and 330 equalizes the injection interval angle AINT with the steady-state injection interval angle AINTB (the dashed line in Fig. 5 (h)) in the period between the time t6 and the time t9.

If the determination is negative at step 300, the ECU 50 moves to step 320 and judges whether the main injection control permission flag XJPLT1 is one. If the determination is positive at step 320, the ECU 50 moves to step 322 and judges whether the pilot injection permission flag XJPLT2 is set to one. If the determination is negative at step 322, the ECU 50 executes step 330.

If the determination is positive at step 322, the ECU 50 moves to step 324 and subtracts a predetermined value G (G>0) from the current injection interval angle AINT. The ECU 50 sets the resultant (AINT-G) as a new injection interval angle AINT.

Repetitive execution of step 324 gradually decreases the injection interval angle AINT (Fig. 5(h)) in the period from the time t9 to the time t14.

At step 326, the ECU 50 compares the injection interval angle AINT with zero. If the injection interval angle AINT is less than zero, the ECU 50 moves to step 328 and sets the injection interval angle AINT to zero.

If the determination is negative at 320, the ECU also executes step 328.

Execution of steps 320, 326 and 328 maintains the injection interval angle AINT to zero in the period from the time t14 to the time 16 in Fig. 5.

After executing steps 328 or 330, the ECU 50 temporarily suspends the subsequent processing. If the injection interval angle AINT is smaller than the steady-state injection interval angle AINTB at step 310, the ECU 50 also temporarily suspends the subsequent processing. Further, if the injection interval angle AINT is equal to or greater than zero at step 326, the ECU temporarily suspends the subsequent processing. In this manner, the ECU 50 computes the injection interval AINT based on the routine of Fig. 10.

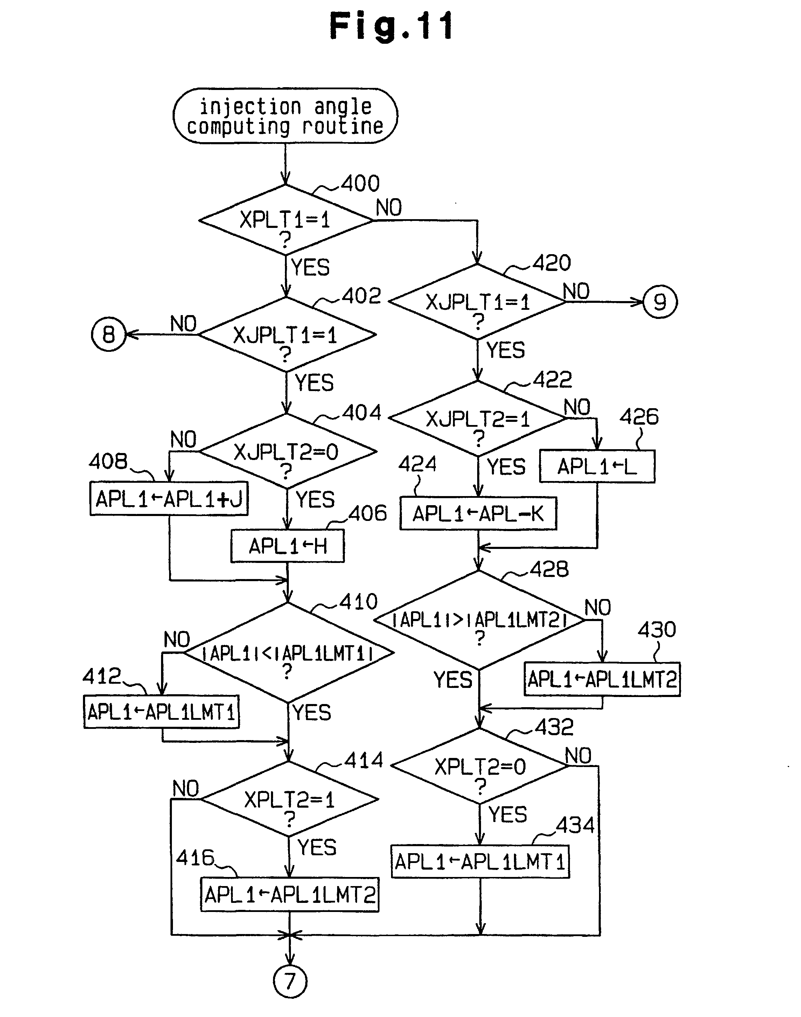

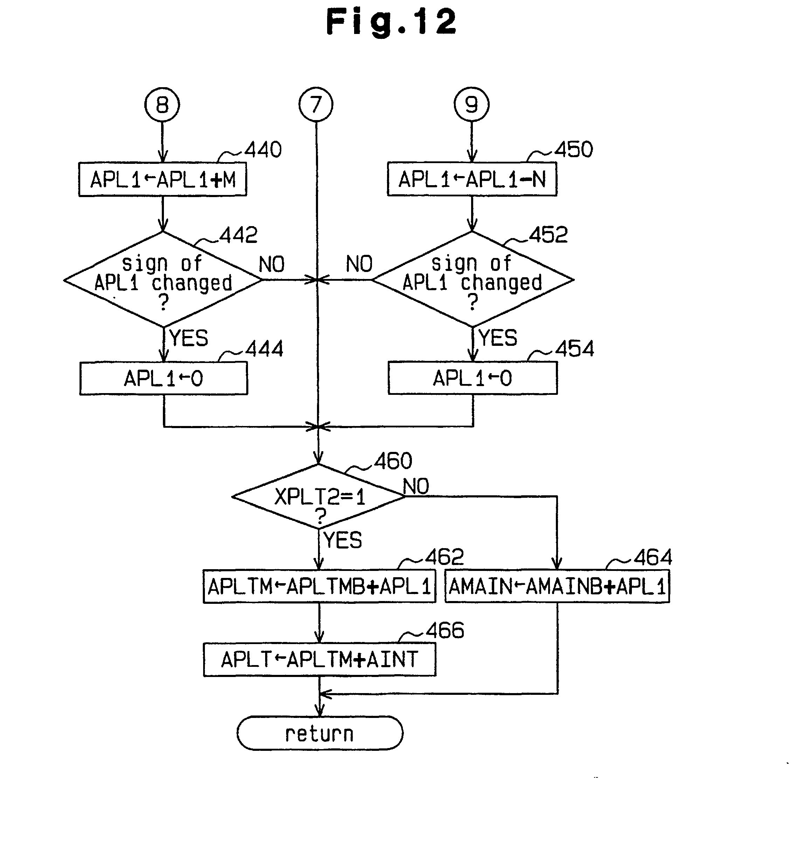

A routine for computing the timing of the pilot injection and the main injection will now be described with reference to the flowcharts of Figs. 11 and 12. The ECU 50 executes this routine in an interrupting manner at the same crank angle increments (for example, at every 180 degrees) as the flag setting routine.

When entering this routine, the ECU 50 judges whether the pilot injection mode flag XPLT1 is set to one at step 400. If the determination is positive, the ECU 50 moves to step 402. At step 402, the ECU 50 judges whether the main injection control permission flag XJPLT1 is one. If the determination is positive, the ECU 50 moves to step 404 and judges whether the pilot injection control permission flag XJPLT2 is zero.

If the determination is positive at step 404, the ECU 50 moves to step 406 and sets the injection angle adjusting value APL1 to a predetermined value H. If the determination is negative at step 404, the ECU 50 moves to step 408 and adds a predetermined value J to the current injection angle adjusting value APL1. The ECU 50 sets the resultant (APL1+J) as a new injection angle adjusting value APL1.

After executing steps 406 or 408, the ECU 50 moves to step 410 and compares the absolute value |APL1| of the adjusting value APL1 with the absolute value |APL1LMT1| of the first limit value APL1LMT1.

The first limit value APL1LMT1 is computed based on the engine speed NE and the basic injection amount QMAIN and is determined such that at least one of the equations (5a) and (5b) is satisfied. The memory of the ECU 50 stores function data defining the first limit value APL1LMT1 based on the engine speed NE and the basic injection amount QMAINB. The memory of the ECU 50 also stores function data defining the values H and J based on the engine speed NE and the basic injection amount QMAINB. The ECU refers to this function data when executing steps 406, 408 and 410 thereby computing the first limit value APL1LMT1 and the values H, J.

For example, if the steady-state torque value Ta of the main injection mode is smaller than the steady-state torque value Td of the pilot injection mode as shown in Fig. 6(a), the first limit value APL1MT1 is computed as a positive value (APL1LMT1>0). In this case, the values H and J are also computed as positive values (H>0, J>0).

If the first limit value APL1LMT1 is a positive value, the injection angle adjusting value APL1 (see Fig. 5(g)) is gradually increased to the first limit value APL1LMT1 in the period from the time t1 to the time t4 of Fig. 5.

Depending on the state of the engine 1 (the engine speed NE and the basic injection amount QMAINB), the steady-state torque value Ta of the main injection mode can be greater than the steady-state torque value Td of the pilot injection mode as shown in Fig. 6(b). In this case, the first limit value APL1LMT1 is computed as a negative value (APL1LMT1<0). Also, the values H and J are computed as negative values (H<0, J<0).

If the first limit value APL1LMT1 is computed as a negative value, the injection angle adjusting value APL1 does not change in the manner shown in Fig. 5(g) between the time t1 and the time t4. Instead, the value APL1 gradually decreases to the first limit value APL1LMT1, which is a negative value.

As the adjusting value APL1 is gradually changed to the first limit value APL1LMT1, the main injection angle AMAIN is gradually changed, accordingly. That is, if the first limit value APL1LMT1 is a positive value, the main injection angle AMAIN is gradually advanced (the time t1 to the time t4). If the first limit value APL1LMT1 is a negative value, the main injection angle AMAIN is gradually retarded. The absolute values |H| and |J| of the values H and J are small enough that the changes of the main injection angle AMAIN do not create a sudden change in the engine torque.

If the absolute value |APL1| of the injection angle adjusting value APL1 is equal to or greater than the absolute value |APL1LMT1| of the first limit value APL1LMT1 at step 410, the ECU 50 moves to step 412. At step 412, the ECU 50 equalizes the injection angle adjusting value APL1 with the first limit value APL1LMT1 and moves to step 414. On the other hand, if the absolute value |APL1| is smaller than the absolute value |APL1LMT1| at step 410, the ECU 50 also moves to step 414.

At step 414, the ECU 50 judges whether the pilot injection execution flag XPLT2 is one. If the determination is negative, the ECU 50 moves to step 460 shown in Fig. 12. If the determination is positive at step 414, the ECU 50 moves to step 416 and equalizes the injection angle adjusting value APL1 with the second limit value APL1LMT2.

Execution of steps 414 and 416 changes the injection angle adjusting value APL1 from the first limit value APL1LMT1 to the second limit value APL1LMT2 at the time t4. The value APL1 is maintained at the second limit value APL1LMT2 at the time t5. After executing step 416, the ECU 50 moves to step 460 shown in Fig. 12.

On the other hand, if the determination is negative at step 402, the ECU 50 moves to step 440 shown in Fig. 12. At step 440, the ECU 50 adds a predetermined value M to the current injection angle adjusting value APL1 and sets the resultant (APL1+M) as a new adjusting value APL1.

Like the values H and J, the value M is computed based on the engine speed NE and the basic injection amount QMAINB. The memory of the ECU 50 stores function data defining the value M in relation to the engine speed NE and the basic injection amount QMAINB. The ECU 50 refers the function data for computing the value M. When the first limit value APL1LMT1 is a positive value, the value M is a positive value (M>0) like the values H and J. If the first adjusting value APL1LMT1 is a negative value, the value M is a negative value (M<0).

For example, if the value M is a positive value, repetitive execution of step 440 gradually increases the adjusting value APL1 in the period from the time t6 to the time t8 (see Fig. 5(g)). If the value M is a negative value, the adjusting value APL1 is gradually decreased.

As the injection angle adjusting value APL1 is changed, the main injection angle APLTM is gradually advanced or retarded relative to the referential main injection angle APLTMB. The absolute value |M| of the value M is small enough that the change of the injection angle APLTM does not cause a sudden torque change.

Then, at step 442, the ECU 50 judges whether the sign of the injection angle adjusting value APL1 has been changed. That is, if the value APL1 was zero or a negative value in the previous routine, the ECU 50 judges whether the value APL1 has been changed to a positive value in the current routine. If the value APL1 was zero or a positive value in the previous routine, the ECU 50 judges whether the value APL1 has been changed to a negative value in the current routine. If the determination is positive, the ECU 50 moves to step 444 and sets the value APL1 to zero. After executing step 444 or when the determination is negative at step 442, the ECU 50 moves to step 460.

Execution of steps 442, 444 maintains the injection angle adjusting value APL1 to zero after the time 8 in Fig. 5. Accordingly, the steady state main injection is executed.

If the determination is negative at step 400 shown in Fig. 11, the ECU 50 moves to step 420. At step 420, the ECU 50 judges whether the main injection control permission flag XJPLT1 is one. If the determination is positive, the ECU 50 moves to step 422 and judges whether the pilot injection control permission flag XJPLT2 is one.

If the determination is negative at step 422, the ECU 50 equalizes the injection angle adjusting value APL1 with a predetermined value L. If the determination is positive at step 422, the ECU 50 moves to step 424 and subtracts a predetermined value K from the current adjusting value APL1 and sets the resultant (APL1-K) as a new adjusting value APL1.

After executing steps 424 or 426, the ECU 50 moves to step 428 and judges the absolute value |APL1| of the adjusting value APL1 with the absolute value |APL1LMT2| of the second limit value APL1LMT2.

The second limit value APL1LMT2 is computed based on the engine speed NE and the basic injection amount QMAIN and is determined such that at least one of the equations (5a) and (5b) is satisfied. The memory of the ECU 50 stores function data defining the second limit value APL1LMT2 based on the engine speed NE and the basic injection amount QMAINB. The memory of the ECU 50 also stores function data defining the values L and K based on the engine speed NE and the basic injection amount QMAINB. The ECU refers to this function data when determining the second limit value APL1LMT2 and the values L, K in the execution of steps 424, 426 and 428.

For example, if the steady-state torque value Ta of the main injection mode is smaller than the steady-state torque value Td of the pilot injection mode as shown in Fig. 6(a), the second limit value APL1MT2 is computed as a negative value (APL1LMT2<0). In this case, the values L and K are computed as positive values (L>0, K>0).

If the second limit value APL1LMT2 is a negative value and the values L and K are positive values, the injection angle adjusting value APL1 is gradually decreased from zero to the second limit value APL1LMT2 (see Fig. 5(g)) in the period from the time t9 to the time t12.

On the other hand, if the steady-state torque value Ta of the main injection mode is greater than the steady-state torque value Td of the pilot injection mode, the second limit value APL1LMT2 is set to a positive value (APL1LMT2>0). In this case, the values L and K are set as negative values (L<0, K<0).

If the second limit value APL1LMT2 is set to a positive value and the values L and K are set as negative values, the injection angle adjusting value APL1, unlike the change shown in Fig. 5(g), is gradually increased from zero to the second limit value APL1LMT2.

As the adjusting value APL1 is gradually changed to the second limit value APL1LMT2, the main injection angle AMAIN is gradually changed. That is, if the second limit value APL1LMT2 is a negative value, the main injection angle APLTM is gradually retarded (from the time t9 to the time t12). If the second limit value APL1LMT2 is a positive value, the main injection angle APLTM is gradually advanced. The absolute values |L| and |K| of the values L and K are small enough that the changes of the main injection angle APLTM do not create a sudden torque change.

In the graph of Fig. 6(a), the limit values APL1LMT1 and APL1LMT2 are determined such that the transient torque values Tb, Tc are intermediate values of the steady-state torque value Ta of the main injection mode and the steady-state torque value Td of the pilot injection mode. However, the second limit value APL1LMT2 and the first limit value APL1LMT1 may be arbitrarily set as long as the first and second transient torque values Tb and Tc satisfy at least one of the equations (5a) and (5b). For example, the limit values APL1LMT1 and APL1LMT2 may be changed such that the transient torque values Tb, Tc are closer to the value Ta or to the value Td.

However, if the absolute values of the limit values APL1LMT1 and APL1LMT2 were too great, the main injection would be executed at an angle that is greatly different from the basic main injection angle AMAINB, APLTMB in both injection modes. That is, the main injection would be performed at a time greatly different from the timing corresponding to the current running condition of the engine 1. This would result in louder combustion noise and higher concentration of NOx in the exhaust. Therefore, in this embodiment, the limit values APL1LMT1 and APL1LMT2 are determined such that the combustion noise and the concentration of NOx in the exhaust are within acceptable ranges.

As described above, the main injection angle APLTM is gradually changed as the injection angle adjusting value APL1 is gradually changed to the second limit value APL1LMT2. That is, if the second limit value APL1LMT2 has a negative value, the main injection angle AMAIN is gradually retarded. If the second limit value APL1LMT2 has a positive value, the main injection angle AMAIN is gradually advanced.

If the absolute value |APL1| of the injection angle adjusting value APL1 is equal to or smaller than the absolute value |APL1LMT2| of the second lmit value APL1LMT2 (the time t11), the ECU 50 moves to step 430. At step 430, the ECU 50 equalizes the injection angle adjusting value APL1 with the second limit value APL1LMT2. The ECU 50 then moves to step 432. On the other hand, if the absolute value |APL1| is greater than the absolute value |APL1LMT2| at step 428, the ECU 50 moves to step 432.

At step 432, the ECU 50 judges whether the pilot injection execution flag XPLT2 is zero. If the determination is negative, the ECU 50 moves to step 460 shown in Fig. 12. If the determination is positive at step 432 (the time t12), the ECU 50 moves to step 434 and equalizes the injection angle adjusting value APL1 with the first limit value APL1LMT1. The ECU 50 then moves to step 460.

If the determination is negative at step 420, the ECU 50 moves to step 450 shown in Fig. 12. At step 450, the ECU 50 subtracts a predetermined value N from the current adjusting value APL1 and sets the resultant (APL1-N) as a new adjusting value APL1.

Like the values L, K, the value N is computed based on the engine speed NE and the basic injection amount QMAINB. The memory of the ECU 50 stores function data defining the value N based on the engine speed NE and the basic injection amount QMAINB. The ECU 50 refers this function data to determine the value N. Like the values L, K, the value N has a positive value when the second limit value APL1LMT2 has a negative value. When the second limit value APL1LMT2 has a positive value, the value N has a negative value.

When the value N has a positive value, repetitive execution of step 450 gradually decreases the injection angle adjusting value APL1 (see Fig. 5(g)) in the period from the time t14 to the time t16. When the value N has a negative value, the adjusting value APL1 (see Fig. 5(g)) is gradually increased.

As the adjusting value APL1 is changed, the main injection angle AMAIN is gradually advanced or retarded relative to the basic main injection angle AMAINB. The absolute value |N| of the value N is small enough that the changes of the main injection angle AMAIN do not create a sudden torque change.

At step 452, the ECU 50 judges whether the sign of the injection angle adjusting value APL1 has been changed as in step 442. If the determination is positive (the time t16), the ECU 50 moves to step 454 and sets the adjusting value APL1 to zero. After executing step 454 or when the determination at step 452 is negative, the ECU 50 moves to step 460.

Execution of steps 452 and 454 maintains the adjusting value APL1 to zero after the time t16. Accordingly, the steady-state main injection is executed.

At step 460, the ECU 50 judges whether the pilot injection execution flag XPLT2 is one. If the determination is positive, the ECU 50 moves to step 462 and computes the main injection angle APLTM (see Fig. 3 (a)) based on the following equation (6).

$$APLTM=APLTMB+APL1 \qquad (6)$$

At a subsequent step 466, the ECU 50 computes the pilot injection timing APLT based on the equation (3).

If the determination is negative at step 460, the ECU 50 moves to step 464 and computes the main injection angle AMAIN (see Fig. 3(b)) based on the following equation (7)

$$AMAIN=AMAINB+APL1 \qquad (7)$$

The memory of the ECU 50 stores function data defining the referential main injection angles AMAINB and APLTMB based on the engine speed NE and the basic injection amount QMAINB. When executing steps 462 and 464, the ECU 50 refers to the function data to determine the referential main injection angles AMAINB and APLTMB.

After executing steps 464 or 466, the ECU 50 temporarily suspends the subsequent processing.

As described above, the ECU 50 performs the routine of Figs. 11 and 12, which computes the main injection angle AMAIN of the main injection mode, the pilot injection angle APLT of the pilot injection mode and the main injection angle APLTM of the pilot injection mode.

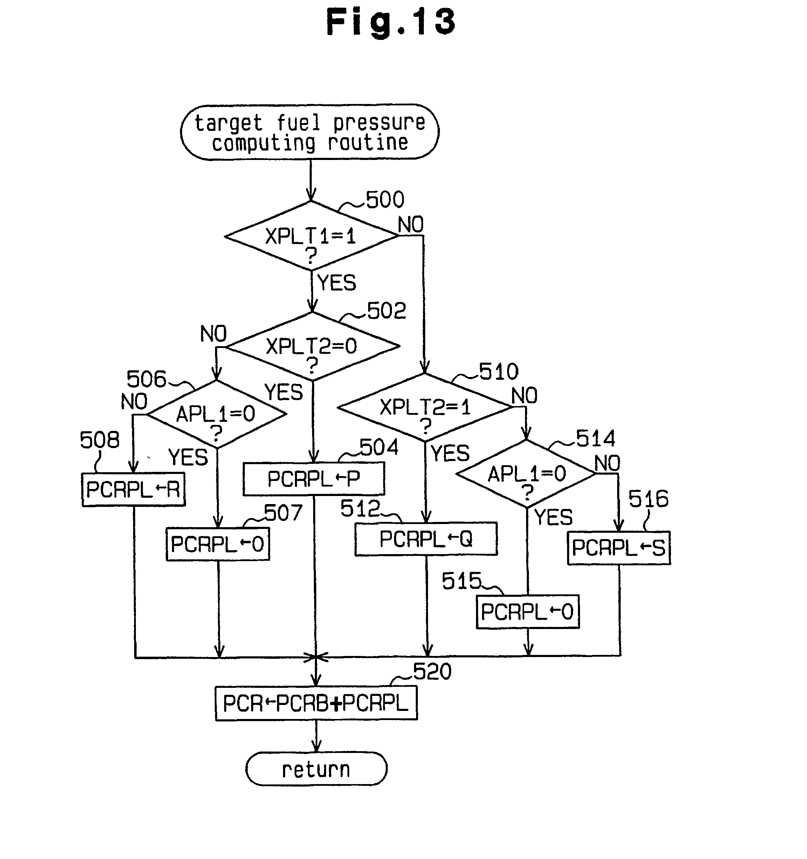

A routine for computing a target value of the fuel pressure PC of the common rail 4 will now be described with reference to the routine of Fig. 13. The ECU 50 executes this routine in an interrupting manner at the same crank angle increments (for example, at every 180 degrees) as the flag setting routine.

When entering this routine, the ECU 50 judges whether the pilot injection mode flag XPLT1 is one at step 500. If the determination is positive, the ECU 50 moves to step 502 and judges whether the pilot injection execution flag XPLT2 is zero. If the determination is positive at step 502, the ECU 50 moves to step 504 and equalizes the fuel pressure adjusting value PCRPL with a predetermined value P.

If the determination is negative at step 502, the ECU 50 moves to step 506 and judges whether the injection angle adjusting value APL1 is zero. If the determination is positive at step 506, the ECU 50 moves to step 507 and sets the fuel pressure adjusting value PCRPL to zero. On the other hand, if the determination is negative at step 506, the ECU 50 moves to step 508 and equalizes the fuel pressure adjusting value PCRPL with a predetermined value R.

The value P is computed based on the engine speed NE and the basic injection amount QMAINB. When the first limit value APL1LMT1 has a positive value, the value P has a negative value (P<0). When the first limit value APL1LMT1 has a negative value, the value P has a positive value (P>0).

The injection angle adjusting value APL1 approaches the first limit value APL1LMT1 in the period from the time t1 to the time t4. Accordingly, the main injection angle AMAIN is advanced relative to the referential main injection angle AMAINB. In this period, the value P has a negative value.

Like the value P, the value R is computed based on the engine speed NE and the basic injection amount QMAINB. When the second limit value APL1LMT2 is a positive value, the value R is a negative value (R<0). When the second limit value APL1LMT2 is a negative value, the value R is a positive value (R>0).

As shown in Fig. 5(g), the injection angle adjusting value APL1 (see Fig. 5(g)) is changed to the second limit value APL1LMT2 at the time t4. Thus, the value R is a positive value in the period from the time t4 to the time t8, in which the main injection angle APLTM is retarded relative to the referential main injection angle APLTMB.

The memory of the ECU 50 stores function data defining the values P, R based on the engine speed NE and the basic injection amount QMAINB. The ECU 50 refers to this function data at steps 504, 508 for determining the values P, R.

If the determination is negative at step 500, the ECU 50 moves to step 510 and judges whether the pilot injection execution flag XPLT2 is one. If the determination is positive at step 510, the ECU 50 moves to step 512 and equalizes the fuel pressure adjusting value PCRPL with a predetermined value Q.

If the determination at step 510 is negative, the ECU 50 moves to step 514 and judges whether the injection angle adjusting value APL1 is zero. If the determination is positive at step 514, the ECU 50 moves to step 515 and sets the fuel pressure adjusting value PCRPL to zero. On the other hand, if the determination is negative at step 514, the ECU 50 moves to step 516 and equalizes the adjusting value PCRPL with a predetermined value S.

The value Q is computed based on the engine speed NE and the basic injection amount QMAINB. When the second limit value APL1LMT2 is a negative value, the value Q is set to a positive value (Q>0). When the second limit value APL1LMT2 is a positive value, the value Q is set to a negative value (Q<0).

In the period from the time t9 to the time t12, the injection angle adjusting value APL1 approaches the second limit value APL1LMT2. Accordingly, the main injection angle APLTM is retarded relative to the referential main injection angle APLTMB. In this period, the value Q is set to a positive value.

Like the value Q, the value S is computed based on the engine speed NE and the basic injection amount QMAINB. When the first limit value APL1LMT1 is a positive value, the value S is set to a negative value (S<0). When the first limit value APL1LMT1 is a negative value, the value S is set to a positive value (S<0).

The injection angle adjusting value APL1 is changed to the first limit value APL1LMT1 at the time 12. Accordingly, the main injection angle AMAIN is advanced relative to the referential main injection angle AMAINB in the period from the time t12 to the time t16. In this period, the value S is set to a negative value.

The memory of the ECU 50 stores function data defining the values Q, S based on the engine speed NE and the basic injection amount QMAINB. The ECU 50 refers to this function data for determining the values Q, S at steps 512, 516. In the timing chart of Fig. 5, the value P is equal to the value S, and the value R is equal to the value Q.

After executing steps 504, 507, 508, 512, 515 or 516, the ECU 50 moves to step 520 and computes the final target fuel pressure PCR based on the following equation (8).

$$PCR = PCRB + PCRPL \qquad (8)$$

After executing step 520, the ECU 50 temporarily suspends the subsequent processing.

In this manner, the apparatus according to the first embodiment controls the injection timing of fuel, the fuel injection amount, the injection pressure and the injection interval based on the routines of Figs. 7 to 13. Accordingly, the apparatus has the following advantages.

(1) When the fuel injection mode is switched, the engine torque is gradually changed from the steady-state torque value (the steady-state torque value Ta of the main injection mode, the steady-state torque value Td of the pilot injection mode) to the steady-state torque value Ta, Td via the transient torque values Tb, Tc. The gradual change of the engine torque is performed by changing the main injection angles AMAIN, APLTM. Therefore, compared to an apparatus that changes the injection interval for gradually changing the engine torque, the apparatus of the first embodiment positively controls the rate of change of the engine torque thereby preventing a sudden change of the engine torque when the injection mode is switched.

(2) The main injection angles AMAIN and APLTM before and after switching the injection mode are controlled such that the engine torque immediately before and after switching the injection mode remains the same. That is, the injection angles AMAIN and APLTM are controlled such that the transient torques Tb, Tc are equal. This positively prevents the torque of the engine from suddenly changing.

(3) When the main injection angles AMAIN, APLTM are changed, the fuel pressure PC in the common rail 4 is lowered by a greater degree as the angles AMAIN, APLTM are advanced further. Therefore, changes of the main injection angles AMAIN, APLTM do not result in louder combustion noise or a higher NOx concentration in the exhaust.

(4) When the injection mode is switched, the pilot injection interval AINT is gradually changed. This results in a gradual change of the combustion state of the engine 1 when the combustion mode is switched. Therefore, a sudden change in the engine torque is prevented.

(5) When the injection interval angle AINT is gradually changed, the final pilot injection amount QPLT1 is decreased by a greater degree as the pilot injection interval angle AINT becomes smaller. Therefore, the main injection is started when the combustion pressure, which was increased by the pilot injection, is sufficiently lowered. This prevents the combustion pressure from suddenly increasing thereby suppressing the combustion noise.

A second embodiment of the present invention will now be described. The differences from the embodiment of Figs. 1-8 will mainly be discussed below, and like or the same reference numerals are given to those components that are like or the same as the corresponding components of the embodiment of Figs 1 to 13.

In the embodiment of Figs. 1 to 13, the torque shock due to switching of the injection mode is prevented by changing the main injection angles AMAIN, APLTM. In the second embodiment, the torque shock is prevented by changing the final main injection amount QMAIN.

The second embodiment includes a routine for adjusting the main injection amount, as well as the flag setting routine, the injection amount computing routine and the injection interval angle computing routine of the embodiment of Figs. 1 to 13.

In the injection amount computing routine of Fig. 9, the final main injection amount QMAIN is computed at step 238. In the second embodiment, step 238 is omitted and the ECU 50 temporarily suspends the routine when finishing steps 234 or 236. Further, in the second embodiment, the main injection angles AMAIN, APLTM are always equal to the referential main injection angles AMAINB, APLTMB. Also, the final target fuel pressure PCR is always equal to the basic target pressure PCRB.

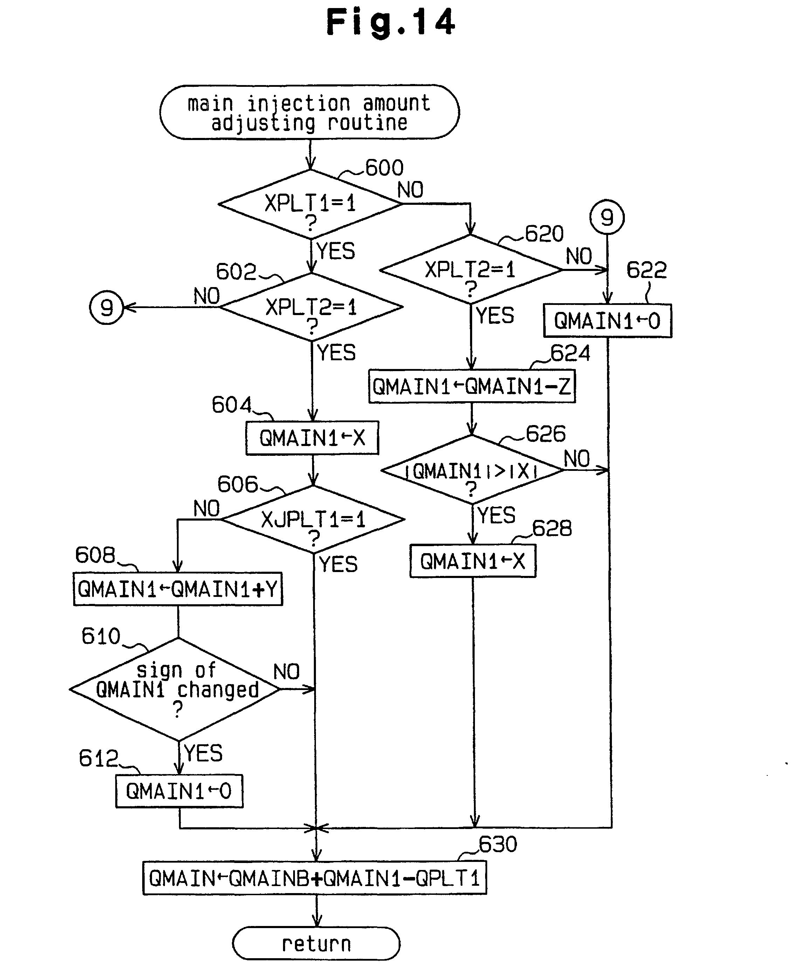

A routine for adjusting the final main injection amount QMAIN will now be described with reference to Figs. 4, 14 and 15. The ECU 50 executes this routine in an interrupting manner at the same crank angle increments (for example, at every 180 degrees) as the flag setting routine.

When entering this routine, the ECU 50 judges whether the pilot injection mode flag XPLT1 is one at step 600. If the determination is positive, the ECU 50 moves to step 602 and judges whether the pilot injection execution flag XPLT2 is one. If the determination is negative at step 602, the ECU moves to step 622 and sets a final main injection amount adjusting value QMAIN1, which is value for adjusting the final main injection amount QMAIN, to zero (from the time t1 to the time t4 in Fig. 5). If the determination is positive at step 602, the ECU 50 moves to step 604 and equalizes the final main injection adjusting value QMAIN1 with a limit value X (the time t4).

At a subsequent step 606, the ECU 50 judges whether the main injection control permission flag XJPLT1 is one. If the determination is negative, the ECU 50 moves to step 608. At step 608, the ECU 50 adds a predetermined value Y to the current adjusting value QAMAIN1 and sets the resultant (QMAIN1+Y) as a new adjusting value QMAIN1 (the times t6 and t7). The ECU 50 then moves to step 610.

At step 610, the ECU 50 judges whether the sign of the adjusting value QMAIN1 has been changed. That is, if the value QMAIN1 was zero or a negative value in the previous routine, the ECU 50 judges whether the value QMAIN1 has been changed to a positive value in the current routine. If the value QMAIN1 was zero or a positive value in the previous routine, the ECU 50 judges whether the value QMAIN1 has been changed to a negative value in the current routine. If the determination is positive, the ECU 50 moves to step 612 and sets the value QMAIN1 to zero (the time t8).

If the determination is positive at step 606 or if the determination is negative at step 610, the ECU 50 moves to step 630. The ECU 50 also moves to step 630 after executing step 612.

If the determination is negative at step 600, the ECU 50 moves to step 620 and judges whether the pilot injection execution flag XPLT2 is one. If the determination is positive at step 620, the ECU 50 moves to step 624. At step 624, the ECU 50 subtracts a predetermined value Z from the current adjusting value QMAIN1 and sets the resultant (QMAIN1-Z) as a new adjusting value QMAIN1 (the times t9 and t10). The ECU 50 then moves to step 626.

At step 626, the ECU 50 compares the absolute value |QMAIN1| of the adjusting value QMAIN1 and the absolute value |X| of the limit value X. If the absolute value |QMAIN1| is greater than the absolute value |X|, the ECU 50 moves to step 628 and equalizes the main injection adjusting value QMAIN1 with the value X (the time t11) and moves to step 630. If the absolute value |QMAIN1| is equal to or smaller than the absolute value |X| at step 626, the ECU 50 executes step 630.

If the determination is negative at step 620, the ECU 50 moves to step 622. At step 622, the ECU 50 sets the adjusting value QMAIN1 to zero (the time t13 to t16) and moves to step 630.

At step 630, the ECU 50 computes the final main injection amount QMAIN based on the following equation (9).

$$QMAIN=QMAINB+QMAIN1-QPLT1 \qquad (9)$$

After executing step 630, the ECU 50 temporarily suspends the subsequent processing.

The limit value X and the values Y, Z are computed based on the engine speed NE and the basic injection amount QMAINB. The memory of the ECU 50 stores function data defining the values X, Y and Z in relation to the engine speed NE and the basic injection amount QMAINB. The ECU 50 refers to the function data for determining the values X, Y and Z.

The limit value X is determined such that at least one of the following equations (10a) and (10b) is satisfied.

$$Te=Tf \leqq Tg \qquad (10a)$$

$$Tg \leqq Tf=Te \qquad (10b)$$

wherein Te is a steady-state torque value of the main injection mode, Tg is a steady-state torque value of the pilot injection mode and Tf is a transient torque value.

In the equations (10a), (10b), the steady-state torque value Te of the main injection mode is a torque value when the final main injection amount QMAIN of the main injection mode is a value obtained by subtracting the final pilot injection amount QPLT1 from the basic injection amount QMAINB (QMAIN=QMAINB-QPLT1). The steady-state torque value Tg of the pilot injection mode is a torque value when the final main injection amount QMAIN of the pilot injection mode is set to the value QMAINB-QPLT1. The transient torque value Tf is a torque value corresponding to the time when the final main injection value QMAIN is set to a value computed by subtracting the limit value X from or by adding the limit value X to the amount (QMAINB-QPLT1) during the pilot injection mode.

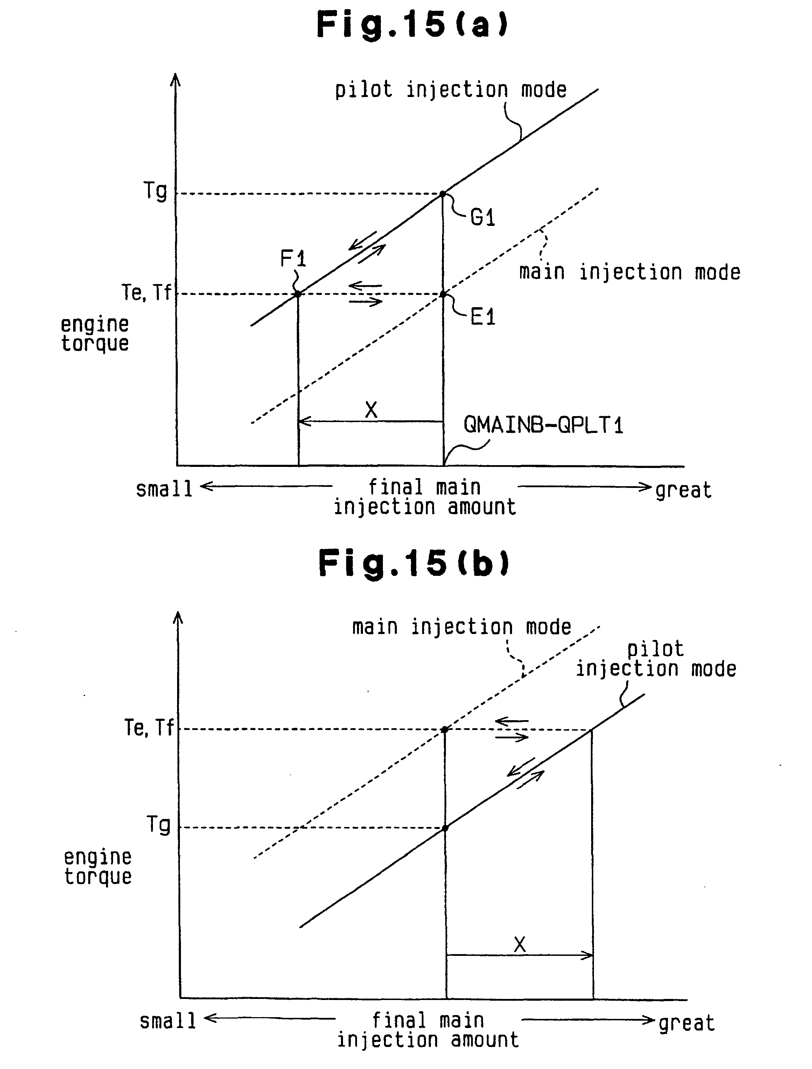

For example, when the steady-state torque value Te of the main injection mode is smaller than the steady-state torque value Tg of the pilot injection mode as shown in Fig. 15(a), the limit value X is set as a negative value (X<0). In this case, the values Y, Z are both set to positive values (Y>0, Z>0).

When the value X is a negative value, the main injection amount adjusting value QMAIN1 (see Fig. 5(j)) is decreased from zero to the value X at the time t4. As a result, the injection mode is switched from the main injection mode to the pilot injection mode at the time t4. At the same time, the limit value X is subtracted from the final main injection amount QMAIN. Accordingly, the engine torque is changed from a point E1 to a point F1 in Fig 15(a).

The limit value X is determined such that the steady-state torque value Te of the main injection mode, which corresponds to the point E1, matches the transient torque value Tf, which corresponds to the point F1 (see equations (10a), (10b)). Thus, switching the combustion mode creates little torque shock. In other words, when the combustion mode is switched, a shock due to the torque fluctuations is prevented.

In the period from the time t6 to the time t8, the main injection adjusting value QMAIN1 (see Fig. 5(j)) gradually increases from the limit value X to zero. In other words, in the period from the time t6 to the time t8, the final main injection amount QMAIN, which had been decreased with the limit value X, is gradually increased to the steady-state value (QMAINB-QPLT1). Accordingly, the engine torque is increased from the point F1 to a point G1 in Fig. 15(a).

Compared to the injection interval angle AINT, the final main injection amount QMAIN is closely correlated with the engine torque and thus has greater influence on the engine torque. Therefore, changing the final main injection amount QMAIN positively controls the engine torque. The rate of increase of the final main injection amount QMAIN, or the value Y, is adjusted to control the rate of change of the engine torque. In other words, even if the transient torque value Tf, which corresponds to the point F1, is greatly different from the steady-state torque value Tg of the pilot injection mode, which corresponds to the point G1, the engine torque is gradually increased from the value Tf to the value Tg. This prevents torque shock.

In the period from the time t9 to the time 12, the main injection adjusting value QMAIN1 is decreased from zero to the limit value X. As a result, the main injection amount QMAIN is gradually decreased from the steady-state value (QMAINB-QPLT1) to the limit value X. Accordingly, the engine torque gradually decrease from the point G1 to the point F1 in Fig. 15(a).

As in the period between the time t6 and the time t8, the rate of decrease of the final main injection amount QMAIN, or the value Z, is adjusted in the period from the time t9 to the time t12 such that the engine torque is gradually changed without abrupt torque fluctuations. Thus, the engine torque is gradually decreased from the steady-state torque value Tg of the pilot injection mode to the transient torque value Tf.

At the time t12, the main injection amount adjusting value QMAIN1 is changed from the limit value X to zero. As a result, the final main injection amount QMAIN is increased with the value X at the same time when the injection mode is switched from the pilot injection mode to the main injection mode. Accordingly, the engine torque is changed from the point F1 to the point E1 shown in Fig. 15(a).

Like the change of the combustion mode at the time t4, the change of the combustion mode at the time t12 virtually does not change the engine torque. Thus, switching the combustion mode does not create a torque shock.

Depending on the state of the engine 1 (the engine speed NE and the basic injection amount QMAINB), the steady-state torque value Te of the main injection mode can be greater than the steady-state torque value Tg of the pilot injection mode as shown in Fig. 15(b). In this case, the limit value X is set as a positive value (X>0). In this case, the values Y and Z are both set as negative values (Y<0, Z<0).

If the value X is a positive value, the torque shock that accompanies switching the combustion mode is prevented as in the case where the value X is a negative value. Further, the engine torque is gradually decreased from the transient torque value Tf to the steady-state torque value Tg of the pilot injection mode or from the steady-state torque value Tg of the pilot injection mode to the transient torque value Tf.

In addition to the advantages (4) and (5) of the first embodiment, the second embodiment has the following advantages.

(6) When the fuel injection mode is switched, the engine torque is gradually changed from a steady-state torque value (the steady-state torque value Te of the main injection mode or the steady-state torque value Tg of the pilot injection mode) to the other steady-state torque value (Tg or Te) via the transient torque value Tf. The final main injection amount QMAIN is changed such that the engine torque is gradually changed. Therefore, in comparison to changing the injection interval such that the engine torque is gradually changed, the apparatus of the second embodiment positively controls the rate of change of the engine torque thereby preventing a sudden change of the engine torque when the injection mode is switched.

(7) When switching the injection mode, the final main injection amount QMAIN is controlled such that the engine torque maintains the same value. That is, the final main injection amount QMAIN is controlled such that the transient torque Tf is equal to the steady-state torque value Te of the main injection mode. This positively prevents the torque of the engine from being suddenly changed.

Although only two embodiments of the present invention have been described herein, it should be apparent to those skilled in the art that the present invention may be embodied in many other specific forms without departing from the spirit or scope of the invention. Particularly, it should be understood that the invention may be embodied in the following forms.

In the first embodiment, the injection timing of the main injection is changed to prevent shocks due to torque fluctuation, and in the second embodiment, the injection amount of the main injection is changed. However, shocks due to torque fluctuations may be prevented by changing the injection pressure of the main injection. Specifically, the fuel pressure adjusting value PCRPL, which is used to correct the final target fuel pressure PCR, may be changed in the same manner as the main injection adjusting value QMAIN1 shown in Fig. 5(j).

Suppose the engine torque increases when the injection mode is switched from the main injection mode to the pilot injection mode. In this case, the fuel pressure adjusting value PCRPL is decreased by a predetermine value from zero simultaneously with switching of the injection mode. This lowers the final target fuel pressure PCR (the time t4 of Fig. 5). As a result, the injection pressure is lowered and the shock, which accompanies the switching of the injection mode, is prevented. When the injection mode is switched back to the pilot injection mode, the fuel pressure adjusting value PCRPL is gradually increased to zero. This gradually increases the final target fuel pressure PCR (from the time t6 to the time t8). As a result, the engine torque is gradually increased to the steady-state torque.

On the other hand, when the injection mode is switched from the pilot injection mode to the main injection mode, the fuel pressure adjusting value PCRPL is gradually decreased to zero before the injection mode is switched (from the time t9 to the time t12). This lowers the final target fuel pressure PCR. Then, at the same time that the injection mode is switched, the fuel pressure adjusting value PCRPL is increased to zero thereby increasing the final target fuel pressure PCR (the time t12).

Like the injection timing and the injection amount, the injection pressure of the main injection is closely correlated with the engine torque and thus has a great influence on the engine torque. Therefore, changing the injection pressure of the main injection positively controls the engine torque thereby preventing a shock of torque fluctuations when the injection mode is switched.

In the second embodiment, the final main injection amount QMAIN is changed to prevent abrupt torque fluctuations. However, the main injection angles AMAIN, APLTM, as well as the final main injection amount QMAIN, may be changed for preventing the shock. This allows absolute values |APL1LMT1|, |APL1LMT2| of the limit values APL1LMT1, APL1LMT2 and the absolute value |X| of the limit value X to be relatively small. Thus, the smaller absolute values |APL1LMT1|, |APL1LMT2| and |X| decrease the combustion noise and the concentration of NOx in the exhaust gas when the final main injection amount QMAIN and the main injection angles AMAIN, APLTM are changed.

In the first embodiment, the first transient torque value Tb is equal to the second transient torque value Tc. However, the torque values Tb and Tc may be different as long as the difference |Tb-Tc| between the values Tb and Tc is sufficiently small. That is, the difference |Tb-Tc| only needs to be small enough such that the shock of torque fluctuations is not sensed by the passengers when the injection mode is switched. In the second embodiment, the transient torque Tf is equal to the steady-state torque Te of the main injection mode. However, like the torque values Tb and Tc, the torque values Tf and Te may be different.

In the first embodiment, the control of the main injection timing may be modified as the following two embodiments [a] and [b].

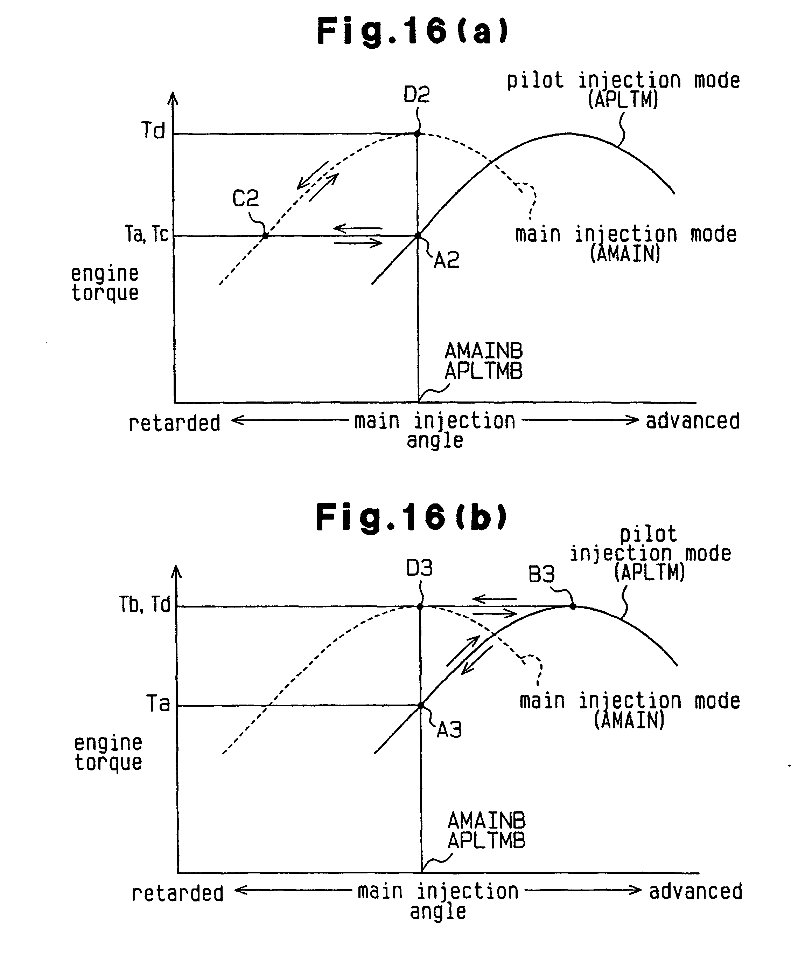

[a] When the injection mode is switched from the pilot injection mode to the main injection mode, the main injection angle APLTM of the pilot injection mode is simultaneously retarded relative to the referential main injection angle APLTMB such that the transient torque value Tc is equal to the steady-state torque value Ta of the pilot injection mode. Then, the main injection angle AMAIN is gradually advanced to the referential main injection angle AMAINB. Accordingly, as shown in Fig. 16(a), the engine torque is changed from a point A2 to a point C2, then gradually increased to a point D2.

When the injection mode is switched from the main injection mode to the pilot injection mode, the main injection angle AMAIN is gradually retarded from the referential main injection angle AMAINB prior to the mode shift until the torque values Ta and Tc are equal. Next, the main injection angle AMAIN is changed to the referential main injection angle APLTMB at the same time that the combustion mode is switched. Accordingly, the engine torque is gradually decreased from the point D2 to the point C2 and then changed to the point A2.

[b] When the combustion mode is switched from the pilot injection mode to the main injection mode, the main injection angle APLTM is gradually advanced from the referential main injection angle APLTMB prior to switching the injection mode until the transient torque value Tb is equal to the steady-state torque value Td (see Fig. 16(b)). Next, at the same time that the combustion mode is switched, the main injection angle APLTM of the pilot injection mode is changed to the referential main injection angle AMAINB of the main injection mode. In this manner, the engine torque is gradually increased form a point A3 to a point B3 as shown in Fig. 16(b) and then changed to a point D3.

On the other hand, when the injection mode is switched from the main injection mode to the pilot injection mode, the main injection angle AMAIN of the main injection mode is advanced relative to the referential main injection angle AMAINB at the same time that the injection mode is switched such that the steady-state torque value Td of the main injection mode is equal to the transient torque value Tb. Next, the main injection angle APLTM is gradually retarded to the referential main injection angle APLTMB. Accordingly, the engine torque is moved from a point D3 to a point B3 and is then gradually decreased to a point A3.

The embodments [a], [b] have the same advantages as the first embodiment.

In the first embodiment, the limit values APL1LMT1, APL1LMT2 of the injection angle adjusting value APL1, the predetermined values H, J, M, L, K and N and the values P, Q, R and S of the fuel pressure adjusting value PCRPL are computed based on the running state of the engine 1. However, when changes of the engine torque due to the combustion mode switching are substantially constant, the values APL1LMT1, APL1LMT2, H, J, M, L, K, N, P, Q, R and S may be constant values. Also, in the second embodiment, the limit value X of the main injection amount adjusting value QMAIN1 and the values Y, Z may be constant values.

In the first embodiment, the values P, Q, R and S regarding the fuel pressure adjusting value PCRPL are computed based on the engine speed NE and the basic injection amount QMAINB. However, in addition to the values NE and QMAINB, the coolant temperature THW detected by the temperature sensor 21 and the fuel temperature THF detected by the fuel temperature sensor 23 may be used for computing the values P, Q, R and S. This allows the atomization of fuel to be more accurately controlled.

In the preferred embodments, fuel is supplied to the common rail 4 by the supply pump 6 and then supplied to the injector 2 from the common rail 4. However, the common rail 4 may be replaced by a distributor type injection pump, which supplies fuel to each injector 2.

Therefore, the present examples and embodiments are to be considered as illustrative and not restrictive and the invention is not to be limited to the details given herein, but may be modified within the scope of the appended claims.

A fuel injection control apparatus for a diesel engine (1). The combustion mode of the engine (1) is switched between a main injection mode in which only a main injection is performed and a pilot injection mode in which a main injection and a pilot injection are performed. The apparatus includes an electronic control unit, or ECU (50). When the mode is switched, the ECU (50) suppresses torque shock of the engine (1) based on the injection timing of the main injection, which affects the main injections.

**Claims**

1. A fuel injection control apparatus for an internal combustion engine (1) having a first injection mode for performing a single fuel injection for one cycle of a piston and a second injection mode for performing a set of fuel injections for one cycle of the piston, wherein the control apparatus selects from the first and the second modes, and a main fuel injection amount (QMAIN1) of at least one specific fuel injection of the set of fuel injections is greater than the fuel injection amount (QPLT1) of each remaining fuel injection of the set, the single fuel injection being also referred to as "main fuel injection", the apparatus being
**characterized in that**
   the apparatus once decreases the main fuel injection amount (QMAIN1) of the first injection mode and then gradually increases the main fuel injection amount (QMAIN1) of the first injection mode so that the engine torque (Te) approaches the engine torque (Tg) of the second injection mode when the control apparatus switches the injection mode from the first injection mode to the second injection mode; and
   the apparatus gradually decreases the main fuel injection amount (QMAIN1) of the second injection mode and then once increases the main fuel injection amount (QMAIN1) of the second injection mode so that the engine torque (Tg) of the second injection mode approaches the engine torque (Te) of the first injection mode when the control apparatus switches the injection mode from the second injection mode to the first injection mode.

2. The apparatus according to claim 1, **characterized in that**
   the apparatus has suppressing means (50) for suppressing changes of the engine torque based on the main fuel injection amount (QMAIN1), which serves as a variable that affects the main injections when the mode is switched, and wherein
   the suppressing means (50) once decreases the main fuel injection amount (QMAIN1) of the first injection mode and then gradually increases the main fuel injection amount (QMAIN1) of the first injection mode when the injection mode is switched from the first injection mode to the second injection mode, and wherein the suppressing means (50) gradually decreases the main fuel injection amount (QMAIN1) of the second injection mode and then once increases the main fuel injection amount (QMAIN1) of the second injection mode when the injection mode is switched from the second injection mode to the first injection mode.

3. The apparatus according to claim 1, **characterized in that**

only a main injection is performed in the first injection mode and a main injection and a pilot injection are performed in the second injection mode.

4. The apparatus according to claim 2, **characterized in that**

the suppressing means includes control means for controlling the engine torque, wherein the control means gradually changes the engine torque from a pre-switching torque value, which is the engine torque prior to switching injection mode, to a post-switching torque value, which is the engine torque after switching the injection mode, based on a change of the variable.

5. The apparatus according to claim 2, **characterized in that**

the suppressing means includes control means for controlling the engine torque, wherein, when the injection mode is switched, the control means sets the engine torque to a transient torque value based on a change of the variable, and wherein the transient torque value is between a pre-switching torque value, which represents the engine torque prior to switching the injection mode, and a post-switching torque value, which represents the engine torque after switching the injection mode.

6. The apparatus according to claim 5, **characterized in that**

the torque controlling means includes:

means for setting a transient controlling value, wherein the transient controlling value is the value of the variable for setting the engine torque to the transient torque value prior to switching the injection mode; and
changing means for changing the value of the variable, wherein the changing means gradually changes the value of the variable to be the same as the transient controlling value after a judgment is made to switch the injection mode and before switching the combustion mode, and wherein, when the injection mode is being switched, the changing means changes the value of the variable from the transient controlling value to a value for setting the engine torque to the post-switching torque value.

7. The apparatus according claim 5, **characterized in that**
the control means includes:

switching means for setting a transient controlling value, wherein the transient controlling value is a value of the variable for setting the engine torque to the transient torque value during the post-switching injection mode; and
changing means for changing the value of the variable, wherein the changing means changes the value of the variable to the transient controlling value when the combustion mode is switched, and wherein, after the combustion mode is switched, the changing means gradually changes the value of the variable from the transient controlling value to a value for setting the engine torque to the post-switching torque value.

8. The apparatus according to claim 5, **characterized in that**
the torque controlling means includes:

setting means for setting transient controlling values, wherein the setting means sets a first transient controlling value, the first transient controlling value being the value of the variable for setting the engine torque to a first transient torque value, which is between the pre-switching torque value and the post-switching torque value, prior to switching the injection mode, and wherein the setting means sets a second transient controlling value, the second transient controlling value being the value of the variable for setting the engine torque to a second transient torque value, which is between the pre-switching torque value and the post-switching torque value, after switching the injection mode; and
changing means for changing the value of the variable, wherein the changing means gradually changes the value of the variable to the first transient controlling value after a judgment is made to switch the injection mode and before switching the combustion mode, wherein, when the injection mode is being switched, the changing means changes the value of the variable from the first transient controlling value to the second transient controlling value, and wherein, when the injection mode has been switched, the changing means gradually changes the value of the variable from the second transient controlling value to a value for setting the engine torque to the post-switching torque value.

9. The apparatus according to claim 8, **characterized in that**
the setting means sets the first and second transient controlling values such that the first transient torque value is equal to the second transient torque value.

10. The apparatus according to any one of claims 2 to 9, **characterized in that**
the suppressing means includes:

means for gradually changing a injection interval between the main injection and the pilot injection when switching the combustion mode; and

means for decreasing the injection amount of the pilot injection as the injection interval is shortened.

11. The apparatus according to claim 6, **characterized in that**
the setting means sets the transient controlling value such that the transient torque value is equal to the post-switching torque value.

12. The apparatus according to claim 6, **characterized in that**
the setting means sets the transient controlling value such that the transient torque value is equal to the pre-switching torque value.

**Patentansprüche**

1. Kraftstoffeinspritzungssteuerapparat für eine Brennkraftmaschine (1) mit innerer Verbrennung mit einem ersten Einspritzmodus zum Ausführen einer einzelnen Kraftstoffeinspritzung für einen Zyklus eines Kolbens und einem zweiten Einspritzmodus zum Ausführen einer Reihe von Kraftstoffeinspritzungen für einen Zyklus des Kolbens, wobei der Steuerapparat zwischen dem ersten und dem zweiten Modus auswählt, und wobei eine Hauptkraftstoffeinspritzmenge (QMAIN1) mindestens einer spezifischen Kraftstoffeinspritzung der Reihe von Kraftstoffeinspritzungen größer als die Kraftstoffeinspritzmenge (QPLT1) jeder restlichen Kraftstoffeinspritzung der Reihe ist, wobei die einzelne Kraftstoffeinspritzung auch als "Hauptkraftstoffeinspritzung" bezeichnet ist, wobei der Apparat **dadurch gekennzeichnet ist, daß:**

der Apparat einmal die Hauptkraftstoffeinspritzmenge (QMAIN1) des ersten Einspritzmodus vermindert und dann die Hauptkraftstoffeinspritzmenge (QMAIN1) des ersten Einspritzmodus allmählich so erhöht, daß sich das Brennkraftmaschinendrehmoment (Te) dem Brennkraftmaschinendrehmoment (Tg) des zweiten Einspritzmodus annähert, wenn der Steuerapparat den Einspritzmodus von dem ersten Einspritzmodus zu dem zweiten Einspritzmodus umschaltet, und
der Apparat die Hauptkraftstoffeinspritzmenge (QMAIN1) des zweiten Einspritzmodus allmählich vermindert und dann einmal die Hauptkraftstoffeinspritzmenge (QMAIN1) des zweiten Einspritzmodus so erhöht, daß sich das Brennkraftmaschinendrehmoment (Tg) des zweiten Einspritzmodus dem Brennkraftmaschinendrehmoment (Te) des ersten Einspritzmodus annähert, wenn der Steuerapparat den Einspritzmodus von dem zweiten Einspritzmodus zu dem ersten Einspritzmodus umschaltet.

2. Apparat gemäß Anspruch 1, **dadurch gekennzeichnet, daß:**

der Apparat eine Unterbindungsvorrichtung (50) zum Unterbinden von Änderungen des Brennkraftmaschinendrehmoments auf der Grundlage der Hauptkraftstoffeinspritzmenge (QMAIN1) aufweist, welche als eine Variable dient, die die Haupteinspritzungen beeinflußt, wenn der Modus umgeschaltet wird, und wobei die Unterbindungsvorrichtung (50) einmal die Hauptkraftstoffeinspritzmenge (QMAIN1) des ersten Einspritzmodus vermindert und dann die Hauptkraftstoffeinspritzmenge (QMAIN1) des ersten Einspritzmodus allmählich erhöht, wenn der Einspritzmodus von dem ersten Einspritzmodus zu dem zweiten Einspritzmodus umgeschaltet wird, und wobei die Unterbindungsvorrichtung (50) die Hauptkraftstoffeinspritzmenge (QMAIN1) des zweiten Einspritzmodus allmählich vermindert und dann die Hauptkraftstoffeinspritzmenge (QMAIN1) des zweiten Einspritzmodus einmal erhöht, wenn der Einspritzmodus von dem zweiten Einspritzmodus zu dem ersten Einspritzmodus umgeschaltet wird.

3. Apparat gemäß Anspruch 1, **dadurch gekennzeichnet, daß:**

nur eine Haupteinspritzung in dem ersten Einspritzmodus ausgeführt wird und eine Haupteinspritzung und eine Voreinspritzung in dem zweiten Einspritzmodus ausgeführt werden.

4. Apparat gemäß Anspruch 2, **dadurch gekennzeichnet, daß:**

die Unterbindungsvorrichtung eine Steuereinrichtung zum Steuern des Brennkraftmaschinendrehmoments aufweist, wobei die Steuereinrichtung auf der Grundlage einer Veränderung der Variablen das Brennkraftmaschinendrehmoment von einem Vorumschaltdrehmomentwert, welcher der Brennkraftmaschinendrehmomentwert vor dem Umschalten des Einspritzmodus ist, allmählich zu einem Nachumschaltdrehmomentwert verändert, welcher der Brennkraftmaschinendrehmomentwert nach dem Umschalten des Einspritzmodus ist.

5. Apparat gemäß Anspruch 2,
    **dadurch gekennzeichnet, daß:**

    die Unterbindungsvorrichtung eine Steuereinrichtung zum Steuern des Brennkraftmaschinendrehmoments aufweist, wobei dann, wenn der Einspritzmodus umgeschaltet wird, die Steuereinrichtung auf der Grundlage einer Veränderung der Variablen das Brennkraftmaschinendrehmoment auf einen Übergangsdrehmomentwert einstellt, und wobei der Übergangsdrehmomentwert zwischen einem Vorumschaltdrehmomentwert, welcher das Brennkraftmaschinendrehmoment vor dem Umschalten des Einspritzmodus darstellt, und einem Nachumschaltdrehmomentwert liegt, welcher das Brennkraftmaschinendrehmoment nach dem Umschalten des Einspritzmodus darstellt.

6. Apparat gemäß Anspruch 5,
    **dadurch gekennzeichnet, daß:**

    die Drehmomentsteuereinrichtung aufweist:

    - eine Einrichtung zum Einstellen eines Übergangssteuerwerts, wobei der Ubergangssteuerwert der Wert der Variablen zur Einstellung des Brennkraftmaschinendrehmoments auf den Übergangsdrehmomentwert vor dem Umschalten des Einspritzmodus ist, und
    - eine Änderungseinrichtung zum Ändern des Werts der Variablen, wobei die Änderungseinrichtung den Wert der Variablen allmählich so ändert, daß dieser gleich dem des Übergangssteuerwerts ist, nachdem eine Beurteilung ausgeführt wurde, den Einspritzmodus umzuschalten, und vor dem Umschalten des Verbrennungsmodus, und wobei dann, wenn der Einspritzmodus umgeschaltet wird, die Änderungsvorrichtung den Wert der Variablen von dem Übergangssteuerwert auf einen Wert zum Einstellen des Brennkraftmaschinendrehmoments auf den Nachumschaltdrehmomentwert ändert.

7. Apparat gemäß Anspruch 5,
    **dadurch gekennzeichnet, daß:**

    die Steuereinrichtung aufweist:

    - eine Schalteinrichtung zum Einstellen eines Übergangssteuerwerts, wobei der Übergangssteuerwert ein Wert der Variablen zur Einstellung des Brennkraftmaschinendrehmoments auf den Übergangsdrehmomentwert während des Nachschalteinspritzungsmodus ist, und
    - eine Änderungseinrichtung zum Ändern des Werts der Variablen, wobei die Änderungseinrichtung den Wert der Variablen auf den Übergangssteuerwert ändert, wenn der Verbrennungsmodus umgeschaltet wird, und wobei nach dem Umschalten des Verbrennungsmodus die Änderungseinrichtung den Wert der Variablen von dem Übergangssteuerwert auf einen Wert zum Einstellen des Brennkraftmaschinendrehmoments auf den Nachumschaltdrehmomentwert allmählich ändert.

8. Apparat gemäß Anspruch 5,
    **dadurch gekennzeichnet, daß:**

    die Drehmomentsteuereinrichtung aufweist:

    - eine Einstelleinrichtung zum Einstellen von Übergangssteuerwerten, wobei die Einstelleinrichtung einen ersten Übergangssteuerwert einstellt, wobei der erste Übergangssteuerwert der Wert der Variablen zum Einstellen des Brennkraftmaschinendrehmoments auf einen ersten Übergangsdrehmomentwert ist, welcher zwischen dem Vorumschaltdrehmomentwert und dem Nachumschaltdrehmomentwert ist, vor dem Umschalten des Einspritzmodus ist, und wobei die Einstelleinrichtung einen zweiten Übergangssteuerwert einstellt, wobei der zweite Übergangssteuerwert der Wert der Variablen zum Einstellen des Brennkraftmaschinendrehmoments auf einen zweiten Übergangsdrehmomentwert ist, welcher zwischen dem Vorumschaltdrehmomentwert und dem Nachumschaltdrehmomentwert ist, nach dem Umschalten des Einspritzmodus ist, und
    - eine Änderungseinrichtung zum Ändern des Werts der Variablen, wobei die Änderungseinrichtung den Wert der Variablen auf den ersten Übergangssteuerwert allmählich ändert, nachdem eine Beurteilung erfolgt ist, den Einspritzmodus umzuschalten, und vor dem Umschalten des Verbrennungsmodus, wobei dann, wenn der Einspritzmodus umgeschaltet wird, die Änderungseinrichtung den Wert der Variablen von dem ersten Übergangssteuerwert zu dem zweiten Übergangssteuerwert ändert, und wobei dann, wenn der Einspritzmodus umgeschaltet ist, die Änderungseinrichtung den Wert der Variablen von dem zweiten Übergangssteuerwert zu einem Wert zum Einstellen des Brennkraftmaschinendrehmoments auf den Nachumschaltdrehmomentwert ändert.

9. Apparat gemäß Anspruch 8,
   **dadurch gekennzeichnet, daß:**

   die Einstelleinrichtung den ersten und den zweiten Übergangssteuerwert so einstellt, daß der erste Übergangsdrehmomentwert gleich dem zweiten Übergangsdrehmomentwert ist.

10. Apparat gemäß einem der Ansprüche 2 bis 9,
    **dadurch gekennzeichnet, daß:**

    die Unterbindungsvorrichtung aufweist:

    - eine Einrichtung zum allmählichen Ändern eines Einspritzabstands zwischen der Haupteinspritzung und der Voreinspritzung beim Umschalten des Verbrennungsmodus und
    - eine Einrichtung zum Vermindern der Einspritzmenge der Voreinspritzung, wenn der Einspritzabstand verkürzt ist.

11. Apparat gemäß Anspruch 6,
    **dadurch gekennzeichnet, daß:**

    die Einstelleinrichtung den Übergangssteuerwert so einstellt, daß der Übergangsdrehmomentwert gleich dem Nachumschaltdrehmomentwert ist.

12. Apparat gemäß Anspruch 6,
    **dadurch gekennzeichnet, daß:**

    die Einstelleinrichtung den Übergangssteuerwert so einstellt, daß der Übergangsdrehmomentwert gleich dem Vorumschaltübergangsdrehmomentwert ist.

## Revendications

1. Appareil de commande d'injection de carburant pour un moteur à combustion interne (1) présentant un premier mode d'injection pour réaliser une seule injection de carburant pendant un cycle d'un piston et un second mode d'injection pour réaliser un ensemble d'injections de carburant pendant un cycle du piston, dans lequel l'appareil de commande sélectionne à partir des premier et second modes, et dans lequel une quantité principale d'injection de carburant (QMAIN1) d'au moins une injection de carburant spécifique de l'ensemble des injections de carburant est supérieure à la quantité d'injection de carburant (QPLT1) de chaque injection de carburant restante de l'ensemble, l'injection de carburant unique étant également désignée sous le nom « d'injection principale de carburant », l'appareil étant **caractérisé** en qu'il diminue une fois la quantité d'injection de carburant principale (QMAIN 1) du premier mode d'injection de carburant et augmente progressivement ensuite la quantité d'injection de carburant principale (QMAIN1) du premier mode d'injection de sorte que le couple moteur (Te) se rapproche du couple moteur (Tg) du second mode d'injection lorsque l'appareil de commande fait passer lé mode d'injection du premier mode d'injection au second mode d'injection ; et
   l'appareil diminue progressivement la quantité d'injection de carburant principale (QMAIN1) du second mode d'injection et augmente une fois la quantité d'injection de carburant principale (QMAIN1) du second mode d'injection, de sorte que le couple moteur (Tg) du second mode d'injection se rapproche du couple moteur (Te) du premier mode d'injection, lorsque l'appareil de commande fait passer le mode d'injection du second mode d'injection au premier mode d'injection.

2. Appareil selon la revendication 1, **caractérisé en ce que** l'appareil comprend des moyens de suppression (50) pour supprimer les changements du couple moteur en fonction de la quantité d'injection de carburant principale (QMAIN1), qui servent de variable qui affectent les injections principales lorsque le mode est commuté, et dans lequel les moyens de suppression (50) diminuent une fois la quantité d'injection de carburant principale (QMAIN1) du premier mode d'injection et augmentent progressivement ensuite la quantité d'injection de carburant principale (QMAIN1) du premier mode d'injection, lorsque le mode d'injection passe du premier mode d'injection au second mode d'injection, et dans lequel les moyens de suppression (50) diminuent progressivement la quantité d'injection de carburant principale (QMAIN1) du second mode d'injection et augmentent une fois la quantité d'injection de carburant principale (QMAIN1) du second mode d'injection lorsque le mode d'injection passe du second mode d'injection au premier mode d'injection.

3. Appareil selon la revendication 1, **caractérisé en ce que** seule une injection principale est réalisée dans le premier mode d'injection et une première injection et une injection pilote sont réalisées dans le second mode d'injection.

4. Appareil selon la revendication 2, **caractérisé en ce que** les moyens de suppression comprennent des moyens de commande pour commander le couple moteur, dans lequel les moyens de commande changent progressivement le couple moteur à partir d'une valeur de couple de pré-commutation, qui représente le couple moteur avant la commutation du mode d'injection, jusqu'à une valeur de couple de post-commutation, qui représente le couple moteur après la commutation du mode d'injection, en fonction d'un changement de variable.

5. Appareil selon la revendication 2, **caractérisé en ce que** les moyens de suppression comprennent des moyens de commande pour commander le couple moteur, dans lequel au moment de la commutation du mode d'injection, les moyens de commande déterminent le couple moteur par rapport à une valeur de couple transitoire basée sur un changement de la variable, et dans lequel la valeur de couple transitoire est comprise entre une valeur de couple de pré-commutation, qui représente le couple moteur avant la commutation du mode d'injection, et une valeur de couple post-commutation, qui représente le couple moteur après la commutation du mode d'injection.

6. Appareil selon la revendication 5, **caractérisé en ce que** les moyens de commande de couple comprennent :

des moyens pour déterminer une valeur de commande transitoire, dans lequel la valeur de commande transitoire est la valeur de la variable destinée à déterminer le couple moteur par rapport à la valeur de couple transitoire avant la commutation du mode d'injection ; et des moyens de changement pour changer la valeur de la variable, dans lequel les moyens de changement changent progressivement la valeur de la variable afin qu'elle soit la même que la valeur de commande transitoire, après avoir pris la décision de commuter le mode d'injection et avant la commutation du mode de combustion, et dans lequel, au moment où le mode d'injection a été commuté, les moyens de changement changent la valeur, de la variable de la valeur de commande transitoire à une valeur destinée à déterminer le couple moteur par rapport à la valeur de couple de post-commutation.

7. Appareil selon la revendication 5, **caractérisé en ce que** les moyens de commande comprennent :

des moyens de commutation pour déterminer une valeur de commande transitoire, dans lequel la valeur de commande transitoire est une valeur de la variable destinée à déterminer le couple moteur par rapport à la valeur de couple transitoire pendant le mode d'injection de post-commutation ; et des moyens de changement pour changer la valeur de la variable, dans lequel les moyens de changement changent la valeur de la variable par rapport à la valeur de commande transitoire lorsque le mode de combustion est commuté, et dans lequel, après la commutation du mode de combustion, les moyens de changement changent progressivement la valeur de la variable, de la valeur de commande transitoire à une valeur destinée à déterminer le couple moteur par rapport à la valeur de couple de post-commutation.

8. Appareil selon la revendication 5, **caractérisé en ce que** les moyens de commande de couple comprennent :

des moyens de réglage pour déterminer les valeurs de commande transitoires, dans lequel les moyens de réglage déterminent une première valeur de commande transitoire, la première valeur de commande transitoire étant la valeur de la variable destinée à déterminer le couple moteur par rapport à une première valeur de couple transitoire, qui est comprise entre la valeur de couple de pré-commutation et la valeur de couple de post-commutation, avant la commutation du mode d'injection, et dans lequel les moyens de réglage déterminent une seconde valeur de commande transitoire, la seconde valeur de commande transitoire étant la valeur de la variable destinée à déterminer le couple moteur par rapport à une seconde valeur de couple transitoire, qui est comprise entre la valeur de couple de pré-commutation et la valeur de couple de post-commutation, après la commutation du mode d'injection ; et des moyens de changement pour changer la valeur de la variable, dans lequel les moyens de changement changent progressivement la valeur de la variable par rapport à la première valeur de commande transitoire après avoir pris la décision de commuter le mode d'injection et avant la commutation du mode de combustion, dans lequel, au moment où le mode d'injection a été commuté, les moyens de changement changent la valeur, de la variable de la première valeur de commande transitoire à la seconde valeur de commande transitoire, et dans lequel, au moment où le mode d'injection a été commuté, les moyens de changement changent progressivement la valeur de la variable de la seconde valeur de commande de transitoire à une valeur destinée à déterminer le couple moteur par rapport à une valeur de couple de post-commutation.

9. Appareil selon la revendication 8, **caractérisé en ce que** les moyens de réglage déterminent les première et seconde valeurs de commande de couple transitoires de sorte que la première valeur de couple transitoire est égale à la seconde valeur de couple transitoire.

10. Appareil selon l'une quelconque des revendications 2 à 9, **caractérisé en ce que** les moyens de suppression comprennent :

   des moyens pour changer progressivement un intervalle d'injection entre l'injection principale et l'injection pilote lors de la commutation du mode de combustion ; et
   des moyens pour diminuer la quantité d'injection de l'injection pilote lorsque l'intervalle d'injection est raccourci.

11. Appareil selon la revendication 6, **caractérisé en ce que** les moyens de réglage déterminent la valeur de commande transitoire de sorte que la valeur de couple transitoire est égale à la valeur de couple de post-commutation.

12. Appareil selon la revendication 6, **caractérisé en ce que** les moyens de réglage déterminent la valeur de commande transitoire de sorte que la valeur de couple transitoire est égale à la valeur de couple de pré-commutation.

# Fig.1

ECU

#1~#4

EP 0 953 756 B1

# Fig.2

# Fig.3(a)

# Fig.3(b)

# Fig.4

EP 0 953 756 B1

Fig.5(a) XPLT1
Fig.5(b) XPLT2
Fig.5(c) XJPLT1
Fig.5(d) XJPLT2
Fig.5(e) QPLT3
Fig.5(f) QPLT1
Fig.5(g) APL1
Fig.5(h) AINT
Fig.5(i) PCRPL
Fig.5(j) QMAIN1

30

# Fig.6(a)

main injection mode
(AMAIN)

Td

C1

Tb, Tc

A1

Ta

B1

pilot injection mode
(APLTM)

engine
torque

APL1LMT2

APL1LMT1

AMAINB
APLTMB

retarded ← main injection → advanced
angle

# Fig.6(b)

pilot injection mode
(APLTM)

Ta

Tb, Tc

Td

main injection mode
(AMAIN)

engine
torque

APL1LMT1

APL1LMT2

AMAINB
APLTMB

retarded ← main injection → advanced
angle

31

# Fig.7

# Fig.8

# Fig.9

```
        ┌─────────────────────────┐
        │   injection amount      │
        │   computing routine     │
        └─────────────────────────┘
                     │
                     ▼
                  ╱──────╲  200        NO
                ╱ XPLT1=1  ╲──────────────┐
                ╲    ?     ╱               │
                  ╲──────╱                 ▼
                     │YES              ╱──────╲  220        NO
              202    │               ╱ XJPLT1=1 ╲──────────────────┐
       NO     ╱──────╲              ╲     ?     ╱                   │
    ┌────────╱ XJPLT1=1 ╲            ╲──────╱                       │
    │        ╲    ?     ╱               │YES                        │
    │          ╲──────╱            222  │                           │
    │             │YES           ╱──────╲  NO                       │
    │      204    │             ╱ XJPLT2=1 ╲──────────┐             │
    │   NO  ╱──────╲            ╲     ?     ╱          │             │
    │  ┌───╱ XJPLT2=0 ╲          ╲──────╱        224   │             │
    │  │   ╲    ?     ╱             │YES       ⑤        │             │
    │  │     ╲──────╱         ┌──────────────┐          │             │
    │  │        │YES          │QPLT3←QPLT3−D │          │             │
    │  │  206   │             └──────────────┘          │             │
    │  │  ┌──────────┐              │                   │             │
    │  │  │ QPLT3←B  │              ▼                   │             │
    │  │  └──────────┘          ╱──────╲  226  NO       │             │
    │  │        │             ╱ QPLT3≧0  ╲─────────┐    │             │
208 │  │        │             ╲    ?     ╱         │    │             │
┌──────────────┐│               ╲──────╱          │    │             │
│QPLT3←QPLT3+C ││                  │YES            │ 228│             │
└──────────────┘│                  │          ┌──────────┐           │
    │     │     │                  │          │ QPLT3←0  │           │
    │     │     └──────┐           │          └──────────┘           │
    │ ⑤   │            ▼           │              │                  │
    │ │  210           │           │              │                  │
    │ │NO ╱──────╲      │           │              │                  │
    │ ├──╱ QPLT3<QPLT2 ╲│           │              │                  │
230 │ │  ╲    ?     ╱               │              │                  │
┌──────────┐╲──────╱                │              │                  │
│QPLT3←QPLT2│  │YES                 │              │                  │
└──────────┘  │                     │              │                  │
    │         └──────────┬──────────┘              │                  │
    │                    ▼                         │                  │
    │                232 ╱──────╲  NO              │                  │
    └───────────────────╱ QPLT3≧A  ╲───────────┐   │                  │
                        ╲    ?     ╱           │   │                  │
                          ╲──────╱             │   │                  │
                             │YES      234     │236│                  │
                        ┌────────────┐   ┌──────────┐                 │
                        │QPLT1←QPLT3 │   │ QPLT1←0  │                 │
                        └────────────┘   └──────────┘                 │
                     238    │                 │                       │
                ┌──────────────────────────┐  │                       │
                │QMAIN←QMAINB−QPLT1         │◄─┘                       │
                └──────────────────────────┘                          │
                             │                                        │
                             ▼                                        │
                        ┌─────────┐                                   │
                        │ return  │                                   │
                        └─────────┘                                   │
```

34

# Fig.10

injection interval angle
computing routine

↓

300

XPLT1=1 ? ──NO──→

│YES

302

──NO── XJPLT1=1 ?

│YES

304

──NO── XJPLT2=0 ?

│YES

306

AINT←E

308

AINT←AINT+F

320

XJPLT1=1 ? ──NO──→

│YES

322

XJPLT2=1 ? ──NO──→ ⑥

│YES

324

AINT←AINT-G

326

AINT≥0 ? ──NO──→

│YES

328

AINT←0

⑥

310

──NO── AINT<AINTB ?

│YES

330

AINT←AINTB

return

# Fig.11

# Fig.12

# Fig.13

```
        ( target fuel pressure )
        (   computing routine   )
                  │
                  ▼           500
              ◇ XPLT1=1 ◇──── NO ──────┐
               ?    YES                 │
                  │                     │
                  ▼           502       │
        NO ──◇ XPLT2=0 ◇                │
        │        ?    YES               │
        │        │              510     │
   506  ▼        │        ◇ XPLT2=1 ◇── NO ──┐
  NO ◇ APL1=0 ◇  │         ?    YES          │
      ?    YES   │              514          │
      │      │   │        ◇ APL1=0 ◇── NO ──┐│
 508  ▼      ▼   ▼   504    ?    YES        ││
 ┌─────────┐ ┌─────────┐    │     512       ││ 516
 │PCRPL←R  │ │PCRPL←P  │     ▼  ┌─────────┐  ▼▼
 └─────────┘ └─────────┘  ┌─────────┐     ┌─────────┐
        │  507 ▼          │PCRPL←Q  │     │PCRPL←S  │
        │ ┌─────────┐     └─────────┘     └─────────┘
        │ │PCRPL←0  │  515  │
        │ └─────────┘  ┌─────────┐
        │      │       │PCRPL←0  │
        │      │       └─────────┘
        └──────┴───────┬────┴──────────┘
                       │         520
              ┌──────────────────┐
              │ PCR←PCRB+PCRPL    │
              └──────────────────┘
                       │
                  ( return )
```

# Fig.14

```
        ( main injection amount )
        (   adjusting routine   )
                   │
                   ▼          600
                  ╱ ╲     NO
              ╱ XPLT1=1 ╲──────────────────────┐
              ╲    ?   ╱                        │
                ╲   ╱                           ▼            ┌─9─┐
                 │ YES                        ╱ ╲    NO      └───┘
    602          ▼                        ╱ XPLT2=1 ╲──────────┐
   ┌─9─┐      ╱ ╲     NO               ╲    ?   ╱           622 │
   └───┘◄───╱ XPLT2=1 ╲                  ╲   ╱           ┌────────────┐
            ╲    ?   ╱                    │ YES          │ QMAIN1←0   │
              ╲   ╱                       ▼              └────────────┘
               │ YES                                          │
   604         ▼                    ┌──────────────────┐      │
          ┌──────────┐          624 │ QMAIN1←QMAIN1−Z  │      │
          │ QMAIN1←X │              └──────────────────┘      │
          └──────────┘                       │                │
               │                             ▼        626     │
   606         ▼                           ╱ ╲    NO          │
          ╱ ╲      NO                   ╱|QMAIN1|>|X|╲────────┤
      ╱ XJPLT1=1 ╲──────┐              ╲    ?   ╱             │
      ╲    ?   ╱        │                ╲   ╱               │
        ╲   ╱           ▼                 │ YES    628       │
   608   │ YES   ┌──────────────┐         ▼                  │
         │       │ QMAIN1←QMAIN1+Y│    ┌──────────┐          │
         │       └──────────────┘      │ QMAIN1←X │          │
         │              │              └──────────┘          │
   610   │              ▼                  │                 │
         │           ╱ ╲     NO            │                 │
         │       ╱  sign of  ╲─────┐       │                 │
         │       ╲ QMAIN1 changed╱  │       │                 │
         │         ╲    ?   ╱      │       │                 │
         │           ╲   ╱        │       │                 │
   612   │            │ YES       │       │                 │
         │            ▼           │       │                 │
         │       ┌──────────┐     │       │                 │
         │       │ QMAIN1←0 │     │       │                 │
         │       └──────────┘     │       │                 │
         │            │           │       │                 │
         └────────────┴───────────┴───────┘                 │
                      │                                      │
                      ▼                              630     │
         ┌──────────────────────────────────┐               │
         │ QMAIN←QMAINB+QMAIN1−QPLT1         │◄──────────────┘
         └──────────────────────────────────┘
                      │
                      ▼
                 (  return  )
```

# Fig.15(a)

# Fig.15(b)

# Fig.16(a)

# Fig.16(b)